# EUROPÄISCHE PATENTSCHRIFT

(11) **EP 4 325 875 B1**
(45) Veröffentlichungstag und Bekanntmachung des Hinweises auf die Patenterteilung: **29.10.2025**
(21) Anmeldenummer: 24150460.4
(22) Anmeldetag: 17.12.2019
(51) Int. Cl.: H04N 5/222, G06T 7/557, H04N 23/45, H04N 23/55

(54) **VORRICHTUNG MIT EINER MULTIAPERTURABBILDUNGSVORRICHTUNG ZUR ERZEUGUNG EINER TIEFENKARTE**
DEVICE HAVING A MULTI-APERTURE IMAGING DEVICE FOR GENERATING A DEPTH MAP
DISPOSITIF DOTÉ D'UN DISPOSITIF DE REPRODUCTION À OUVERTURES MULTIPLES POUR GÉNÉRER UNE CARTE DE PROFONDEUR

(30) Priorität: 21.12.2018 DE 102018222865
(43) Veröffentlichungstag der Anmeldung: 21.02.2024
(62) Teilanmeldung aus: 19828263.4
(73) Patentinhaber: Fraunhofer-Gesellschaft zur Förderung der angewandten Forschung e.V., 80686 München (DE)
(72) Erfinder: Wippermann, Frank, 07745 Jena (DE); Duparré, Jacques, 07745 Jena (DE)
(74) Vertreter: König, Andreas Rudolf

(56) Entgegenhaltungen:
- EP-A1- 3 252 716
- WO-A1-2018/188815
- DE-A1- 102016 204 148
- US-A1- 2012 147 150
- US-A1- 2018 130 210
- ANONYMOUS: "Smart Front Back Dual Camera - Android Apps on Google Play", 6 May 2016 (2016-05-06), XP055673882, Retrieved from the Internet <URL:https://web.archive.org/web/20160506101444/https://play.google.com/store/apps/details?id=com.vkrun.double_camera> [retrieved on 20200305]

## Beschreibung

### Zusammenfassung

Die vorliegende Erfindung bezieht sich auf Multiaperturabbildungsvorrichtungen, insbesondere eine Vorrichtung mit einer Multiaperturabbildungsvorrichtung. Die Vorrichtung ist konfiguriert, um die von der Multiaperturabbildungsvorrichtung enthaltenen Informationen zur Erstellung einer Tiefenkarte und/oder zum Akkumulieren von Bildinformationen zu verwenden. Die vorliegende Erfindung bezieht sich ferner auf Tiefeninformationsgewinnung aus Fokus-Stacks mit einer Array-Kamera.

Multiaperturabbildungsvorrichtungen können das Objektfeld mittels mehrerer Teilgesichtsfelder abbilden. Es existieren Konzepte, die durch Verwendung eines Strahlumlenksystems, etwa eines Spiegels, eine Ablenkung einer Blickrichtung der Kamera-Kanäle aus der Vorrichtungs-Ebene in eine andere Richtung des Gesamtsystems ermöglichen, beispielsweise in etwa senkrecht dazu. Diese senkrechte Richtung kann beispielsweise im Anwendungsfall eines Mobiltelefons in eine Richtung des Gesichts des Benutzers oder in Richtung der vor ihm liegenden Umgebung erfolgen und im Wesentlichen mittels schaltbarer Klappspiegel erfolgen.

DE 10 2016 204 148 A1 bezieht sich auf eine Multiaperturabbildungsvorrichtung, die zumindest einen Bildsensor, ein Array von nebeneinander angeordneten optischen Kanälen und eine Strahlumlenkeinrichtung zum Umlenken eines Strahlengangs der optischen Kanäle umfasst.

WO 2018 188815 A1 bezieht sich auf eine Vorrichtung, die einen Bildsensor und ein Array von optischen Kanälen, wobei jeder optische Kanal eine Optik zur Abbildung eines Teilgesichtsfelds eines Gesamtgesichtsfelds auf einem Bildsensorbereich des Bildsensors umfasst.

Wünschenswert wären Vorrichtungen zur effizienten Bildgenerierung und/oder Vorrichtungen zur einfachen Handhabung.

Die Aufgabe der vorliegenden Erfindung besteht deshalb darin, eine Vorrichtung mit einer Multiaperturabbildungsvorrichtung zu schaffen, die eine effiziente Bilderstellung ermöglicht und/oder eine einfache Handhabung ermöglicht.

Diese Aufgabe wird durch den Gegenstand des unabhängigen Patentanspruchs 1 gelöst.

Eine Erkenntnis der vorliegenden Erfindung besteht darin, dass durch Aufnahme einer Abfolge von Bildern in einer Abfolge von Fokuslagen die Tiefenkarte aus eigenen Bildinformationen erstellt werden kann, so dass es auf Disparitätsinformationen nicht ankommt und möglicherweise auf die Verwendung derartiger Informationen verzichtet werden kann. Gemäß einem Ausführungsbeispiel des ersten Aspekts umfasst eine Vorrichtung eine Multiaperturabbildungsvorrichtung. Die Multiaperturabbildungsvorrichtung umfasst einen Bildsensor, ein Array von nebeneinander angeordneten optischen Kanälen, wobei jeder optische Kanal eine Optik zur Abbildung zumindest eines Teilgesichtsfelds eines Gesamtgesichtsfelds auf einen Bildsensorbereich des Bildsensors umfasst. Die Multiaperturabbildungsvorrichtung weist eine Strahlenumlenkeinrichtung zum Umlenken eines Strahlengangs der optischen Kanäle auf und weist eine Fokussiereinrichtung zum Einstellen einer Fokuslage der Multiaperturabbildungsvorrichtung auf. Eine Steuereinrichtung der Vorrichtung ist ausgebildet, um die Fokussiereinrichtung zu steuern und um Bildinformationen von dem Bildsensor zu empfangen. Die Steuereinrichtung ist konfiguriert, um die Multiaperturabbildungsvorrichtung in eine Abfolge von Fokuslagen zu steuern, um eine korrespondierende Abfolge von Bildinformationen des Gesamtgesichtsfelds zu erfassen, und um basierend auf der Abfolge von Bildinformationen eine Tiefenkarte für das erfasste Gesamtgesichtsfeld zu erstellen. Vorteilhaft daran ist, dass die Tiefenkarte aus der Abfolge von Fokuslagen erzeugt werden kann, so dass bereits eine geringe Anzahl optischer Kanäle ausreichend ist, um Tiefeninformation zu gewinnen. De Steuereinrichtung ist ausgebildet ist, um in der Abfolge von Fokuslagen eine korrespondierende Anzahl von Gruppen von Teilbildern zu erfassen, wobei jedes Teilbild einem abgebildeten Teilgesichtsfeld zugeordnet ist; um aus einem Vergleich von lokalen Bildschärfeinformationen in den Teilbildern die Tiefenkarte zu erstellen; und um unter Verwendung der Tiefenkarte die Teilbilder einer Gruppe von Teilbildern zu einem Gesamtbild zusammenzusetzen. Die Steuereinrichtung ist ausgebildet, um Bereiche des Gesamtgesichtsfeldes in der Vorab-Tiefenkarte anhand eines Qualitätskriteriums auszuwählen, für die eine Verbesserung erforderlich ist, und um zusätzliche Tiefeninformationen zum Ergänzen der Vorab-Tiefenkarte für die ausgewählten Bereichen zu bestimmen und für nicht ausgewählte Bereiche nicht zu bestimmen.

Gemäß einem Ausführungsbeispiel des ersten Aspekts ist die Steuereinrichtung ausgebildet, um die Tiefenkarte aus der Abfolge von Bildinformationen zu erstellen, bspw. ohne zusätzliche Messungen oder Auswertungen der Tiefeninformation durch andere Verfahren. Vorteilhaft daran ist, dass die Tiefenkarte aus der Abfolge von Fokuslagen erzeugt werden kann, so dass bereits eine Aufnahme des Gesamtgesichtsfelds aus einer Blickrichtung einen hinreichenden Umfang von Informationen zur Erstellung der Tiefenkarte liefern kann.

Gemäß einem Ausführungsbeispiel des ersten Aspekts sind die optischen Kanäle ausgebildet sind, um das Gesamtgesichtsfeld zumindest stereoskop zu erfassen. Die Steuereinrichtung ist ausgebildet, um eine Vorab-Tiefenkarte basierend auf aus den optischen Kanälen erhaltenen Disparitätsinformationen zu erstellen, und um die Vorab-Tiefenkarte basierend auf Tiefeninformationen, die auf der Abfolge von Bildinformationen basieren, zu ergänzen, um die Tiefenkarte zu erhalten. Alternativ oder zusätzlich ist andersherum die Steuereinrichtung ausgebildet, um eine Vorab-Tiefenkarte basierend auf der Abfolge von Bildinformationen zu erstellen; und um die Vorab-Tiefenkarte basierend auf Tiefeninformationen, die auf aus den optischen Kanälen erhaltenen Disparitätsinformationen basieren, zu ergänzen, um die Tiefenkarte zu erhalten. Vorteilhaft daran ist, dass eine hochgenaue und hochqualitative Tiefenkarte erhalten werden kann, welche sehr gute Stitching-Ergebnisse ermöglicht.

Gemäß einem Ausführungsbeispiel des ersten Aspekts ist die Steuereinrichtung ausgebildet, um Bereiche des Gesamtgesichtsfeldes in der Vorab-Tiefenkarte anhand eines Qualitätskriteriums auszuwählen, für die eine Verbesserung erforderlich ist, und um zusätzliche Tiefeninformationen zum Ergänzen der Vorab-Tiefenkarte für die ausgewählten Bereichen zu bestimmen und für nicht ausgewählte Bereiche nicht zu bestimmen. Vorteilhaft daran ist, dass der zusätzliche Aufwand an elektrischer Energie und/oder Rechenaufwand zum Ergänzen der Tiefenkarte durch Erstellen oder Bestimmen zusätzlicher Tiefeninformation gering gehalten werden kann und dennoch eine hochqualitative Tiefenkarte erhalten wird.

Gemäß einem Ausführungsbeispiel des ersten Aspekts ist die Steuereinrichtung ausgebildet, um in der Abfolge von Fokuslagen eine korrespondierende Anzahl von Gruppen von Teilbildern zu erfassen. Jedes Teilbild ist hierbei einem abgebildeten Teilgesichtsfeld zugeordnet, so dass jede der Gruppen von Teilbildern eine gemeinsame Fokuslage aufweist. Die Steuereinrichtung ist konfiguriert, um einen Vergleich von lokalen Bildschärfeinformationen in den Teilbildern auszuführen und um hieraus die Tiefenkarte zu erstellen. Dies wird beispielsweise dadurch ermöglicht, dass bei bekannter Fokuslage, die durch die Steuereinrichtung zur Erfassung der Gruppe von Teilbildern eingestellt wurde, und unter Bestimmung scharf abgebildeter Objekte, das bedeutet, Objekte, die sich in der jeweils eingestellten Fokuslage befinden, eine Information darüber erhalten werden kann, dass die jeweils scharf abgebildeten Bildbereiche in einem Abstand zur Multiaperturabbildungsvorrichtung befindlich aufgenommen wurden, die mit der eingestellten Fokuslage korrespondiert. Durch Verwendung mehrerer Gruppen von Teilbildern und mithin mehrerer Fokuslagen lässt sich eine entsprechende Information für unterschiedliche Objekte und somit für das Gesamtgesichtsfeld erzeugen, um so zur Tiefenkarte zu gelangen. Dies ermöglicht eine großflächige oder gar vollständige Kartierung des Gesamtgesichtsfelds bezüglich einer Tiefeninformation.

Gemäß einem Ausführungsbeispiel des ersten Aspekts ist die Vorrichtung ausgebildet, um die Fokussiereinrichtung so zu steuern, dass die Abfolge von Fokuslagen im Wesentlichen äquidistant im Bildraum verteilt ist. Dies kann durch eine möglichst exakte äquidistante Anordnung, aber auch durch Berücksichtigen eines Toleranzbereichs von bis zu ± 25%, ± 15% oder ± 5% erfolgen, wobei die Abfolge von Fokuslagen zwischen einer minimalen Fokuslage und einer maximalen Fokuslage der Abfolge verteilt ist. Durch die Äquidistanz im Bildbereich kann eine gleichmäßige Präzision der Tiefenkarte über unterschiedliche Entfernungen erhalten werden.

Gemäß einem Ausführungsbeispiel des ersten Aspekts ist die Vorrichtung ausgebildet, um basierend auf der Abfolge von Bildinformationen eine Abfolge von das Gesamtgesichtsfeld wiedergebenden Gesamtbildern zu erzeugen, wobei jedes Gesamtbild auf einer Kombination von Teilbildern gleicher Fokuslage basiert. Dieses Zusammenfügen von Teilbildern kann unter Verwendung der Tiefenkarte erfolgen, um eine hohe Bildqualität in dem zusammengefügten Gesamtbild zu erhalten.

Gemäß einem Ausführungsbeispiel des ersten Aspekts ist die Vorrichtung ausgebildet, um ein das Gesamtgesichtsfeld wiedergebendes Gesamtbild basierend auf der Tiefenkarte zu verändern. In Kenntnis der Tiefenkarte können unterschiedliche Bildmanipulationen ausgeführt werden, beispielsweise ein nachträgliches Scharfstellen und/oder Unscharfstellenn eines oder mehrerer Bildbereiche.

Gemäß einem Ausführungsbeispiel des ersten Aspekts ist ein erster optischer Kanal des Arrays ausgebildet, um ein erstes Teilgesichtsfeld des Gesamtgesichtsfelds abzubilden, wobei ein zweiter optischer Kanal des Arrays ausgebildet ist, um ein zweites Teilgesichtsfeld des Gesamtgesichtsfelds abzubilden. Ein dritter optischer Kanal ist ausgebildet, um das Gesamtgesichtsfeld vollständig abzubilden. Dies ermöglicht die Verwendung zusätzlicher bildgebender Funktionalitäten, etwa im Hinblick auf einen Zoom-Bereich und/oder einer Auflösungserhöhung.

Gemäß einem Ausführungsbeispiel des ersten Aspekts weist die Fokussiereinrichtung zumindest einen Aktor zum Einstellen der Fokuslage auf. Die Fokussiereinrichtung ist so angeordnet, dass sie zumindest teilweise zwischen zwei Ebenen angeordnet ist, die durch Seiten eines Quaders aufgespannt werden, wobei die Seiten des Quaders zueinander sowie zu einer Zeilenerstreckungsrichtung des Arrays und eines Teils des Strahlengangs der optischen Kanäle zwischen dem Bildsensor und der Strahlumlenkeinrichtung parallel ausgerichtet sind. Das Volumen des Quaders ist minimal und dennoch so gestaltet, dass es den Bildsensor, das Array und die Strahlumlenkeinrichtung umfasst. Dies ermöglicht die Ausgestaltung der Multiaperturabbildungsvorrichtung mit einer geringen Abmessung entlang einer Tiefenrichtung normal zu den Ebenen.

Gemäß einem nicht beanspruchten Ausführungsbeispiel weist die Multiaperturabbildungsvorrichtung eine Dickenrichtung auf, die normal zu den zwei Ebenen angeordnet ist. Der Aktor weist eine Abmessung parallel zu der Dickenrichtung auf. Ein Anteil von höchstens 50% der Abmessung des Aktors ist ausgehend von einem Bereich zwischen den beiden Ebenen so angeordnet, dass er über die zwei Ebenen hinausragt. Durch die Anordnung des Aktors in einem Umfang von zumindest 50% zwischen den Ebenen wird eine dünne Ausgestaltung der Multiaperturabbildungsvorrichtung erhalten, was auch eine dünne Ausgestaltung der Vorrichtung ermöglicht.

Gemäß einem nicht beanspruchten Ausführungsbeispiel umfasst die Fokussiereinrichtung einen Aktor zum Bereitstellen einer Relativbewegung zwischen einer Optik zumindest eines der optischen Kanäle und dem Bildsensor. Dies ermöglicht eine einfache Einstellung der Fokuslage.

Gemäß einem nicht beanspruchten Ausführungsbeispiel ist die Fokussiereinrichtung ausgebildet, um die Relativbewegung zwischen der Optik eines der optischen Kanäle und dem Bildsensor unter Ausführung einer zu der Relativbewegung simultanen Bewegung der Strahlumlenkeinrichtung auszuführen. Dies ermöglicht die Beibehaltung der eingestellten optischen Beeinflussung durch die Strahlumlenkeinrichtung, beispielsweise im Hinblick auf eine strahlumlenkende Fläche der Strahlumlenkeinrichtung, die in unveränderter Größe genutzt wird, um den Strahlengang umzulenken, was eine geringe Größe der Strahlumlenkeinrichtung ermöglicht, da auf das Vorhalten von größeren Flächen bei vergrößertem Abstand verzichtet werden kann.

Gemäß einem nicht beanspruchten Ausführungsbeispiel ist die Fokussiereinrichtung so angeordnet, dass sie um höchstens 50% aus dem Bereich zwischen den Ebenen des Quaders herausragt. Durch Anordnen der gesamten Fokussiereinrichtung in dem Bereich zwischen den Ebenen, also auch eventueller mechanischer Komponenten und dergleichen, wird eine sehr dünne Ausgestaltung der Multiaperturabbildungsvorrichtung und mithin der Vorrichtung ermöglicht.

Gemäß einem nicht beanspruchten Ausführungsbeispiel ist der zumindest eine Aktor der Fokussiereinrichtung ein piezoelektrischer Biegeaktor. Dies ermöglicht den Erhalt der Abfolge von Fokuslagen mit geringem zeitlichem Abstand.

Gemäß einem nicht beanspruchten Ausführungsbeispiel umfasst die Fokussiereinrichtung zumindest einen Aktor, der ausgebildet ist, um eine Bewegung bereitzustellen. Die Fokussiereinrichtung umfasst ferner eine mechanische Einrichtung zum Übertragen der Bewegung an das Array zum Einstellen der Fokuslage. Der Aktor ist an einer dem Array abgewandten Seite des Bildsensors angeordnet und die mechanische Einrichtung ist so angeordnet, dass ein Kraftfluss lateral an dem Bildsensor vorbeiläuft. Alternativ ist der Aktor an einer dem Array abgewandten Seite der Strahlumlenkeinrichtung angeordnet und die mechanische Einrichtung so angeordnet, dass ein Kraftfluss lateral an der Strahlumlenkeinrichtung vorbeiläuft. Dies ermöglicht die Ausgestaltung der Multiaperturabbildungsvorrichtung dergestalt, dass der Aktuator in lateraler Richtung senkrecht zu der Dickenrichtung angeordnet wird und dabei weder die Strahlengänge der optischen Kanäle blockiert und gleichzeitig eine Aufdeckung der Vorrichtung vermieden werden kann. Bei Verwendung mehrerer Aktoren sehen Ausführungsbeispiele vor, sämtliche Aktoren an der dem Array abwandten Seite des Bildsensors anzuordnen, sämtliche der Aktoren an der dem Array abgewandten Seite der Strahlumlenkeinrichtung anzuordnen oder eine Teilmenge der Aktoren an der dem Array abgewandten Seite des Bildsensors anzuordnen und eine hierzu disjunkte Teilmenge an der dem Array abgewandten Seite der Strahlumlenkeinrichtung anzuordnen.

Gemäß einem nicht beanspruchten Ausführungsbeispiel ist eine relative Lage der Strahlumlenkeinrichtung zwischen einer ersten Stellung und einer zweiten Stellung umschaltbar, so dass in der ersten Stellung der Strahlengang in Richtung eines ersten Gesamtgesichtsfelds umgelenkt wird und in der zweiten Stellung der Strahlengang in Richtung eines zweiten Gesamtgesichtsfelds umgelenkt wird. Die Steuereinrichtung ist ausgebildet, um die Strahlumlenkeinrichtung in die erste Position zu steuern, um eine Abbildungsinformation des ersten Gesamtgesichtsfelds von dem Bildsensor zu erhalten, wobei die Steuereinrichtung ferner ausgebildet ist, um die Strahlumlenkeinrichtung in die zweite Position zu steuern, um eine Abbildungsinformation des zweiten Gesamtgesichtsfelds von dem Bildsensor zu erhalten. Die Steuereinrichtung ist ferner ausgebildet, um einen Teil der ersten Abbildungsinformation in die zweite Abbildungsinformation einzufügen, um eine akkumulierte Bildinformation zu erhalten, die stellenweise das erste Gesamtgesichtsfeld und stellenweise das zweite Gesamtgesichtsfeld wiedergibt. Dies ermöglicht eine einfache Handhabung der Vorrichtung, da ein aufwendiges Umpositionieren der Multiaperturabbildungsvorrichtung, etwas zur Selbstaufnahme vor einem Hintergrund verzichtet werden kann. Dies ist insbesondere vorteilhaft möglich durch die selbsterzeugte Tiefenkarte.

Ein im Folgenden beschriebener zweiter Aspekt ist nicht Teil der beanspruchten Erfindung. Durch Kombinieren von Bildinformationen unterschiedlicher Gesamtgesichtsfelder, so dass in einer akkumulierten Bildinformation stellenweise das erste Gesamtgesichtsfeld und stellenweise das zweite Gesamtgesichtsfeld wiedergegeben wird, eine einfache Handhabung der Vorrichtung erhalten werden kann, da beispielsweise auf eine aufwendige Positionierung des Nutzers und/oder der Vorrichtung verzichtet werden kann.

Gemäß einem Ausführungsbeispiel des zweiten Aspekts umfasst eine Vorrichtung eine Multiaperturabbildungsvorrichtung mit einem Bildsensor, einem Array von nebeneinander angeordneten optischen Kanälen und einer Strahlumlenkeinrichtung. Jeder optische Kanal des Arrays umfasst eine Optik zur Abbildung zumindest eines Teilgesichtsfelds eines Gesamtgesichtsfelds auf einem Bildsensorbereich des Bildsensors. Die Strahlumlenkeinrichtung ist zum Umlenken eines Strahlengangs der optischen Kanäle eingerichtet, wobei eine relative Lage der Strahlumlenkeinrichtung zwischen einer ersten Stellung und einer zweiten Stellung umschaltbar ist, so dass in der ersten Stellung der Strahlengang in Richtung eines ersten Gesamtgesichtsfelds umgelenkt wird und in der zweiten Stellung der Strahlengang in Richtung eines zweiten Gesamtgesichtsfelds umgelenkt wird. Die Vorrichtung weist ferner eine Steuereinrichtung auf, die ausgebildet ist, um die Strahlumlenkeinrichtung in die erste Position zu steuern. Derart angesteuert kann eine Abbildungsinformation von der Steuereinrichtung erhalten werden, die sich auf das erste Gesamtgesichtsfeld bezieht, das auf dem Bildsensor abgebildet wird. Die Steuereinrichtung ist konfiguriert, um die Strahlumlenkeinrichtung in die zweite Position zu steuern, um eine Abbildungsinformation des zweiten Gesamtgesichtsfelds von dem Bildsensor zu erhalten. Eine Reihenfolge des Erhaltens der Abbildungsinformation des ersten Gesamtgesichtsfelds und des Erhaltens der Abbildungsinformation des zweiten Gesamtgesichtsfelds kann hierbei beliebig sein. Die Steuereinrichtung ist konfiguriert, um einen Teil der ersten Abbildungsinformation in die zweite Abbildungsinformation einzufügen, um eine akkumulierte Bildinformation zu erhalten, die stellenweise das erste Gesamtgesichtsfeld und stellenweise das zweite Gesamtgesichtsfeld wiedergibt. Dies ermöglicht die Kombination von Bildinhalten unterschiedlicher Gesamtgesichtsfelder, so dass auf die aufwendige Positionierung der Vorrichtung und/oder Bildgegenständen verzichtet werden kann.

Gemäß einem Ausführungsbeispiel des zweiten Aspekts ist das erste Gesamtgesichtsfeld entlang einer Richtung angeordnet, die einer Nutzerrrichtung der Vorrichtung entspricht oder, die einer entgegengesetzt angeordneten Weltrichtung der Vorrichtung entspricht. Dies ermöglicht die Kombination von Bildinhalten in dem ersten Gesamtgesichtsfeld mit einem Gesamtgesichtsfeld, das hiervon verschieden ist.

Gemäß einer bevorzugten Ausführungsform des zweiten Aspekts ist darüber hinaus das zweite Gesamtgesichtsfeld entlang einer Richtung angeordnet, die dem anderen aus der Nutzerrrichtung und der Weltrichtung entspricht, so dass die beiden Gesamtgesichtsfelder zusammengenommen die Weltrichtung und die Nutzerrichtung erfassen. In der akkumulierten Bildinformation können so Inhalte aus der Weltrichtung und Inhalte aus der Nutzerrichtung miteinander kombiniert werden.

Gemäß einem Ausführungsbeispiel des zweiten Aspekts ist die Steuereinrichtung ausgebildet, um eine Person in der ersten Bildinformation zu identifizieren und zu segmentieren, d. h. zu separieren oder zumindest die Bildinformation bezüglich der Person zu kopieren, und um das Abbild der Person in die zweite Bildinformation einzufügen, um die akkumulierte Bildinformation zu erhalten. Dies ermöglicht das Einfügen des Abbilds der Person in einer Bildumgebung, die eigentlich entlang einer anderen Richtung der Vorrichtung angeordnet ist.

Gemäß einer bevorzugten Ausgestaltung hiervon ist die Vorrichtung ausgebildet, um die Person automatisch zu identifizieren und um das Abbild der Person automatisch in die zweite Bildinformation einzufügen. Dies ermöglicht den Erhalt einer Selbstaufnahme (Selfie) vor einem eigentlich anderen Hintergrund. Hierdurch kann ein aufwendiges Positionieren der Vorrichtung, der Person und/oder des Hintergrunds vermieden werden. Es ermöglicht ferner, die Spiegelverkehrtheit des Hintergrunds zu kompensieren.

Gemäß einem Ausführungsbeispiel des zweiten Aspekts ist die Vorrichtung ausgebildet, um den Teil, etwa eine Person oder zumindest einen Teil hiervon, unter Verwendung einer durch die Vorrichtung aus der ersten Abbildungsinformation erzeugten Tiefenkarte zu identifizieren und/oder zu segmentieren. Die Tiefenkarte kann bspw. unter Verwendung des ersten Aspekts oder durch andere Mittel erstellt werden. Dies ermöglicht eine einfache Implementierung der Ausführungsform.

Gemäß einem Ausführungsbeispiel des zweiten Aspekts ist die Vorrichtung ausgebildet, um für die zweite Bildinformation eine Tiefenkarte mit einer Mehrzahl von Tiefenebenen zu erstellen und, um die erste Bildinformation in einer vorbestimmten Tiefenebene der zweiten Bildinformation einzufügen, um die akkumulierte Bildinformation zu erhalten. Dies ermöglicht die im Hinblick auf die vorgegebene oder vorbestimmte Tiefenebene tiefenrichtige Integration der ersten Bildinformation in die zweite Bildinformation.

Gemäß einem bevorzugten Ausführungsbeispiel hiervon ist die vorgegebene Tiefenebene innerhalb eines Toleranzbereichs von 10% gleich einem Abstand des ersten Gesamtgesichtsfelds von der Vorrichtung. Dies ermöglicht den Erhalt der akkumulierten Bildinformation dergestalt, dass das zweite Gesamtgesichtsfeld so dargestellt wird, als wäre die erste Bildinformation, bzw. der Ausschnitt hieraus, entlang der anderen Richtung der Vorrichtung angeordnet gewesen.

Gemäß einer weiter bevorzugten Ausführungsform hiervon basiert die vorgegebene Tiefenebene auf einer mittels der Platzierung der ersten Bildinformation assoziierte Benutzereingabe. Dies ermöglicht es, dass durch die Benutzereingabe die zu berücksichtigende Tiefenebene zwischen unterschiedlichen Aufnahmen veränderlich ist und/oder an die Auswahl des Benutzers anpassbar ist.

Gemäß einem Ausführungsbeispiel des zweiten Aspekts ist die Vorrichtung konfiguriert, um die erste Bildinformation zu skalieren, um eine skalierte erste Bildinformation zu erhalten, und um die skalierte erste Bildinformation in die zweite Bildinformation einzufügen, um die akkumulierte Bildinformation zu erhalten. Dies ermöglicht es, die erste Bildinformation so in die zweite Bildinformation einzufügen, dass eine vorgegebene Wahrnehmung in der akkumulierten Bildinformation erhalten wird, insbesondere im Hinblick auf die Größe der ersten Bildinformation, was insbesondere in Kombination mit der anpassbaren Tiefenebene, in welche die erste Bildinformation eingefügt wird, vorteilhaft ist, so dass neben der tiefenrichtigen Einfügung auch eine größenrichtige Darstellung ermöglicht ist.

Gemäß einem Ausführungsbeispiel des zweiten Aspekts ist die Vorrichtung konfiguriert, um einen Abstand eines Objekts, das in der ersten Bildinformation abgebildet ist, bezüglich der Vorrichtung zu bestimmen, und um die erste Bildinformation basierend auf einem Vergleich des bestimmten Abstands mit der vorbestimmten Tiefenebene in der zweiten Bildinformation zu skalieren. Dies ermöglicht es, einen durch die Tiefenebene veränderten Abstand der ersten Bildinformation bei Einfügen in die zweite Bildinformation automatisch durch eine Skalierung, d. h., Anpassung der Größe, zu berücksichtigen.

Gemäß einem Ausführungsbeispiel in Übereinstimmung mit dem zweiten Aspekt ist die Vorrichtung konfiguriert, um das erste Gesamtgesichtsfeld und das zweite Gesamtgesichtsfeld innerhalb eines Zeitintervalls von zumindest 0,1 ms bis höchstens 30 ms zu erfassen. Die Untergrenze ist hierbei optional. Eine dergestalt schnelle Erfassung beider Gesamtgesichtsfelder ermöglicht es, Veränderungen in den Gesamtgesichtsfeldern, die durch die Zeit bedingt sind, zu reduzieren oder gar zu vermeiden.

Gemäß einem Ausführungsbeispiel in Übereinstimmung mit dem zweiten Aspekt ist die Vorrichtung konfiguriert, um die akkumulierte Bildinformation als Videodatenstrom zu erhalten. Hierfür kann die Vorrichtung eine Mehrzahl von akkumulierten Bildinformationen für eine Mehrzahl von sequenziellen Abbildungen des ersten Gesamtgesichtsfelds und/oder des zweiten Gesamtgesichtsfelds erhalten und diese zu einer Bildsequenz als Videodatenstrom zusammenfügen.

Alternativ oder zusätzlich sehen Ausführungsbeispiele in Übereinstimmung mit dem zweiten Aspekt vor, die akkumulierte Bildinformation als Einzelbild bzw. stillstehendes Bild (engl.: Still-Image) bereitzustellen.

Gemäß einem Ausführungsbeispiel in Übereinstimmung mit dem zweiten Aspekt umfasst die erste Bildinformation die Abbildung eines Nutzers und die zweite Bildinformation umfasst eine Weltansicht der Vorrichtung. Die Steuereinrichtung ist ausgebildet, um ein Abbild des Nutzers, ggf. basierend auf mit der Vorrichtung erzeugten Tiefenkarteninformationen, aus der ersten Bildinformation zu segmentieren und das Abbild des Nutzers in die Weltansicht einzufügen. Dies ermöglicht den einfachen Erhalt einer Selbstaufnahme mit der Vorrichtung.

Gemäß einem Ausführungsbeispiel in Übereinstimmung mit dem zweiten Aspekt ist die Vorrichtung ausgebildet, um das Abbild des Nutzers tiefenrichtig in die Weltansicht einzufügen. Dies ermöglicht den Eindruck, als stünde der Nutzer vor der Weltansicht, ohne dass die hierfür aufwendige Positionierung erforderlich ist.

Gemäß einem Ausführungsbeispiel in Übereinstimmung mit dem zweiten Aspekt ist die Vorrichtung konfiguriert, um mit unterschiedlichen Fokuslagen eine Abfolge von Abbildungen des ersten Gesamtgesichtsfelds und/oder des zweiten Gesamtgesichtsfelds zu erfassen, und um aus der Abfolge von Abbildungen eine Tiefenkarte für das erste Gesamtgesichtsfeld und/oder das zweite Gesamtgesichtsfeld zu erstellen. Dies ermöglicht insbesondere die Kombination der zweiten Bildinformation mit der ersten Bildinformation in einer vorgegebenen Tiefenebene und/oder die tiefenrichtige Abbildung, wobei hierfür die Vorteile des ersten Aspekts der vorliegenden Erfindung ausgenutzt werden können. Das bedeutet, der erste Aspekt ist mit Ausgestaltungen des zweiten Aspekts kombinierbar und/oder der zweite Aspekt ist mit Ausgestaltungen des ersten Aspekts kombinierbar. Insbesondere in Kombination ergeben die beiden Aspekte vorteilhafte Ausgestaltungen, auf die noch eingegangen wird.

Weitere vorteilhafte Ausgestaltungen der vorliegenden Erfindung sind in abhängigen Patentansprüchen definiert.

Unter Bezugnahme auf die beiliegenden Zeichnungen werden bevorzugte Ausführungsbeispiele der vorliegenden Erfindung nachfolgend erläutert. Es zeigen:
- Fig. 1a: eine schematische perspektivische Ansicht einer Vorrichtung gemäß dem ersten Aspekt;
- Fig. 1b: eine schematische perspektivische Ansicht einer Vorrichtung gemäß einem Ausführungsbeispiel des zweiten Aspekts;
- Fig. 1c: eine schematische perspektivische Ansicht einer Vorrichtung gemäß einem Ausführungsbeispiel, die den ersten Aspekt und den zweiten Aspekt kombiniert;
- Fig. 2a: eine schematische Ansicht unterschiedlicher Fokuslagen gemäß einem Ausführungsbeispiel, in welche eine Vorrichtung gemäß dem ersten Aspekt steuerbar ist;
- Fig. 2b: eine schematische Darstellung der Verwendung einer aus unterschiedlichen Fokuslagen gemäß einem Ausführungsbeispiel erstellten Tiefenkarte sowie deren Generierung;
- Fig. 3a: eine schematische perspektivische Ansicht einer Vorrichtung gemäß einem Ausführungsbeispiel, bei dem ein Bildsensor ein Array optischer Kanäle und eine Strahlumlenkeinrichtung einen Quader im Raum aufspannen;
- Fig. 3b: eine schematische Seitenschnittansicht der Vorrichtung aus Fig. 3a gemäß einem Ausführungsbeispiel, bei der die Multiaperturabbildungsvorrichtung eine Mehrzahl von Aktoren aufweist;
- Fig. 3c: eine schematische Seitenschnittansicht der Multiaperturabbildungsvorrichtung aus Fig. 3a und/oder 3b, bei der basierend auf unterschiedlichen Stellungen der Strahlumlenkeinrichtung unterschiedliche Gesamtgesichtsfelder erfassbar sind;
- Fig. 4a: eine schematische Aufsicht auf eine Vorrichtung gemäß einem Ausführungsbeispiel, bei der der Aktor als piezoelektrischer Biegeaktor gebildet ist;
- Fig. 4b: eine schematische Seitenschnittansicht der Vorrichtung aus Fig. 4a zur Verdeutlichung der Anordnung des Aktuators zwischen den Ebenen des Quaders, die im Zusammenhang mit der Fig. 3a beschrieben sind;
- Fig. 5a-d: schematische Darstellungen von Anordnungen von Teilgesichtsfeldern in einem Gesamtgesichtsfeld, gemäß Ausführungsbeispielen;
- Fig. 6: eine schematische perspektivische Ansicht einer Vorrichtung gemäß einem Ausführungsbeispiel des zweiten Aspekts;
- Fig. 7a: ein schematisches Diagramm zur Verdeutlichung der Verarbeitung der Bildinformationen, die gemäß einem Ausführungsbeispiel durch Abbildung der Gesamtgesichtsfelder erhalten werden können;
- Fig. 7b: eine schematische Darstellung einer Skalierung eines Teils einer Abbildungsinformation in der akkumulierten Bildinformation gemäß einem Ausführungsbeispiel; und
- Fig. 8: Teile einer Multiaperturabbildungsvorrichtung gemäß einem Ausführungsbeispiel, die in erfindungsgemäßen Vorrichtungen des ersten und/oder zweiten Aspekts eingesetzt werden kann.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

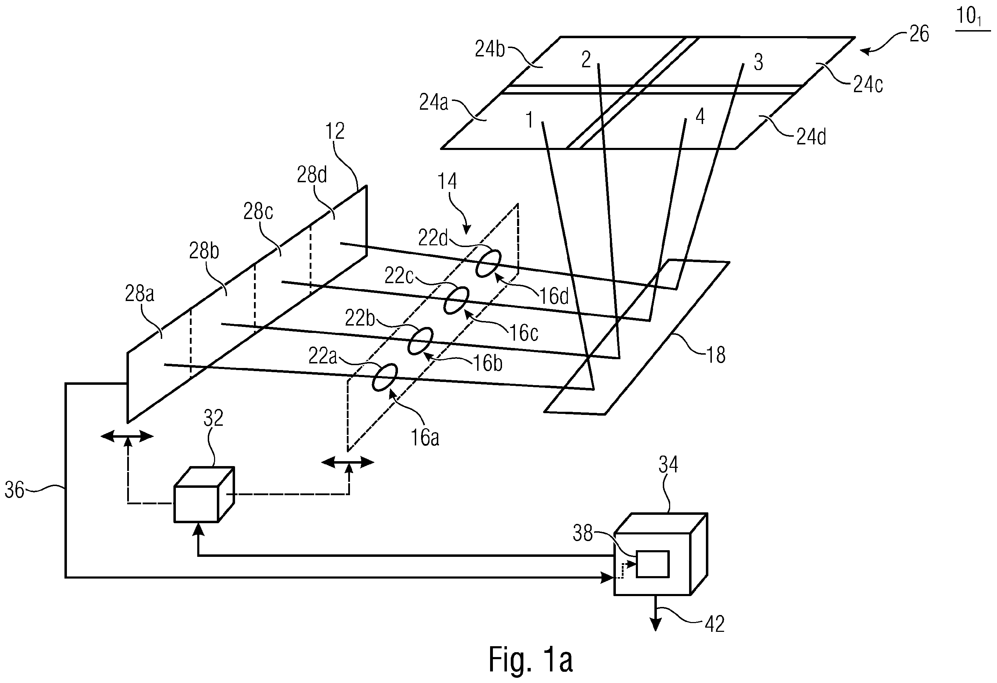

Fig. 1a zeigt eine schematische perspektivische Ansicht einer Vorrichtung 10₁ gemäß dem ersten Aspekt. Die Vorrichtung 10₁ umfasst eine Multiaperturabbildungsvorrichtung, die einen Bildsensor 12 und ein Array 14 von nebeneinander angeordneten optischen Kanälen 16a-e. Die Multiaperturabbildungsvorrichtung umfasst ferner eine Strahlumlenkeinrichtung 18 zum Umlenken eines Strahlengangs der optischen Kanäle 16a-d. Hierdurch können die Strahlengänge der optischen Kanäle 16a-d zwischen einem lateralen Verlauf zwischen dem Bildsensor 12 durch Optiken 22a-d des Arrays 14 hin zu der Strahlumlenkeinrichtung 18 hin zu einem nicht-lateralen Verlauf umgelenkt werden. Unterschiedliche optische Kanäle 16a-d werden insgesamt so umgelenkt, dass jeder optische Kanal 16a-d ein Teilgesichtsfeld 24a-d eines Gesamtgesichtsfelds 26 auf einem Bildsensorbereich 28a-d des Bildsensors 12 abbildet. Die Teilgesichtsfelder 24a-d können eindimensional oder zweidimensional, basierend auf unterschiedlichen Brennweiten der Optiken 22a-d auch dreidimensional im Raum verteilt sein. Zur besseren Verständlichkeit wird das Gesamtgesichtsfeld 26 nachfolgend so beschrieben, dass die Teilgesichtsfelder 24a-d eine zweidimensionale Verteilung aufweisen, wobei einander benachbarte Teilgesichtsfelder 24a-d miteinander überlappen können. Ein Gesamtbereich der Teilgesichtsfelder ergibt das Gesamtgesichtsfeld 26.

Die Multiaperturabbildungsvorrichtung umfasst eine Fokussiereinrichtung 32 zum Einstellen einer Fokuslage der Multiaperturabbildungsvorrichtung. Dies kann durch Verändern einer relativen Lage oder Position zwischen dem Bildsensor 12 und dem Array 14 erfolgen, wobei die Fokussiereinrichtung 32 ausgebildet sein kann, um eine Position des Bildsensors 12 und/oder eine Position des Arrays 14 zu verändern, um eine veränderliche Relativposition zwischen dem Bildsensor 12 und dem Array 14 zu erhalten, um so die Fokuslage der Multiaperturabbildungsvorrichtung einzustellen.

Die Einstellung der relativen Position kann kanalindividuell, für Gruppen von optischen Kanälen oder auch kanalglobal erfolgen. So kann beispielsweise eine einzelne Optik 22a- d, eine Gruppe der Optiken 22a-d oder alle Optiken 22a-d gemeinsam bewegt werden. Selbiges trifft für den Bildsensor 12 zu.

Die Vorrichtung umfasst eine Steuereinrichtung 34, die ausgebildet ist, um die Fokussiereinrichtung 32 zu steuern. Darüber hinaus ist die Steuereinrichtung 34 ausgebildet, um Bildinformationen 36 von dem Bildsensor 12 zu empfangen. Hierbei kann es sich beispielsweise um die auf die Bildsensorbereiche 28a-d abgebildeten Teilgesichtsfelder 24a-d handeln, bzw. um Informationen oder Daten, die den Abbildungen entsprechen. Dies schließt eine Zwischenverarbeitung der Bildinformationen 36 nicht aus, beispielsweise im Hinblick auf eine Filterung, Glättung oder dergleichen.

Die Steuereinrichtung 34 ist konfiguriert, um die Multiaperturabbildungsvorrichtung in eine Abfolge von Fokuslagen zu steuern, um eine korrespondierende Abfolge von Bildinformationen des Gesamtgesichtsfelds 26 zu erfassen. Die Steuereinrichtung 34 ist ausgebildet, um aus der Abfolge von Bildinformationen eine Tiefenkarte 38 für das Gesamtgesichtsfeld 26 zu erstellen. Die Tiefenkarte 38 kann über ein entsprechendes Signal bereitgestellt werden. Die Steuereinrichtung 34 kann basierend auf den durch unterschiedliche Relativpositionen zwischen dem Bildsensor 12 und dem Array 14 erhaltenen unterschiedlichen Fokuslagen unterschiedliche Bilder desselben Gesichtsfelds 26 erfassen bzw. unterschiedlich fokussierte Teilbilder hiervon in Übereinstimmung mit der Segmentierung durch die Teilgesichtsfelder 24a-d.

Tiefenkarten können für unterschiedliche Zwecke eingesetzt werden, beispielsweise zur Bildbearbeitung, aber auch zur Bildzusammenfügung. So kann die Steuereinrichtung 34 ausgebildet sein, um Einzelbilder, die von den Bildsensorbereichen 28a bis 28d erhalten werden, unter Verwendung der Tiefenkarte 38 miteinander zu verbinden, um eine Bildinformation 42 zu erhalten, die die Abbildung des Gesamtgesichtsfelds 26 wiedergibt, das bedeutet, ein Gesamtbild. Für derartige Verfahren zum Zusammenfügen von Teilbildern, im Englischen auch als "Stitching" bezeichnet, ist die Verwendung einer Tiefenkarte besonders vorteilhaft.

Unter Verwendung der Tiefenkarte kann die Steuereinrichtung ausgebildet sein, um die Teilbilder einer Gruppe von Teilbildern zu einem Gesamtbild zusammenzusetzen. Das bedeutet, die für das Stitching verwendete Tiefenkarte kann aus den zu stitchenden Teilbildern selbst erzeugt werden. Bspw. kann basierend auf der Folge von Bildinformationen kann eine Abfolge von das Gesamtgesichtsfeld wiedergebenden Gesamtbildern erzeugt werden. Jedes Gesamtbild kann auf einer Kombination von Teilbildern gleicher Fokuslage basieren. Alternativ oder zusätzlich können zumindest zwei, mehrere oder alle Gesamtbilder aus der Abfolge kombiniert werden, um ein Gesamtbild mit erweiterter Information zu erhalten, etwa zum Erzeugen eines Bokeh-Effekts. Alternativ oder zusätzlich kann das Bild auch so dargestellt werden, dass das gesamte Bild künstlich scharf ist, das bedeutet, eine höhere Anzahl als in den Einzelbildern von Teilbereichen ist scharfgestellt, beispielsweise das gesamte Bild.

Die Vorrichtung 10₁ ist konfiguriert, um das Abbild des Gesamtgesichtsfelds als Monoaufnahme zu erstellen und, um die Tiefenkarte 38 aus der Abfolge von Monoaufnahmen zu erstellen. Obwohl auch eine mehrfache Abtastung des Gesamtgesichtsfelds 26 möglich ist, kann die Vorrichtung 10 bereits aus einer Monoaufnahme die Tiefenkarte erzeugen, was einer Einsparung zusätzlicher Aufnahmen aus unterschiedlicher Blickrichtung einsparen kann, etwa unter Verwendung einer mehrfachen Aufnahme mit der gleichen Vorrichtung oder durch redundanten Anordnung zusätzlicher optischer Kanäle.

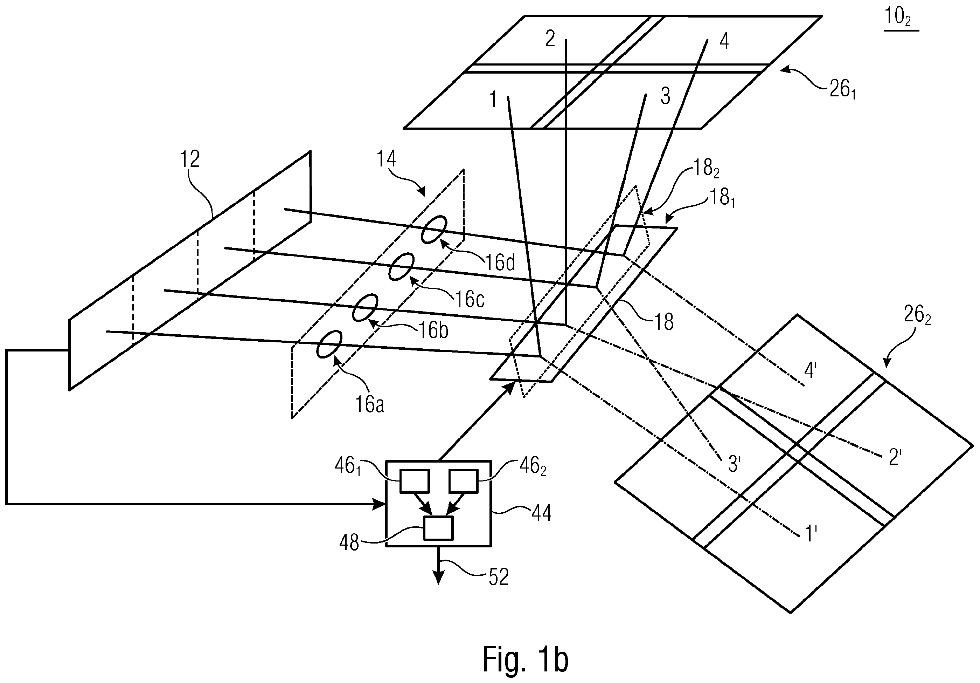

Fig. 1b zeigt eine schematische perspektivische Ansicht einer Vorrichtung 10₂ gemäß einem Ausführungsbeispiel des zweiten Aspekts. Verglichen mit der Vorrichtung 10₁ weist die Vorrichtung 10₂ anstelle der Steuereinrichtung 34 eine Steuereinrichtung 44 auf, die konfiguriert ist, um die Strahlumlenkeinrichtung in unterschiedliche Positionen 18₁ und 18₂ zu steuern. In den unterschiedlichen Positionen 18₁ und 18₂ weist die Strahlumlenkeinrichtung 18 eine voneinander verschiedene relative Lage auf, so dass in den unterschiedlichen Positionen oder Stellungen Abbildungsinformationen von unterschiedlichen Gesamtgesichtsfeldern 26₁ und 26₂ erhalten werden, da die Strahlengänge der optischen Kanäle 16a-d in unterschiedliche und von den verschiedenen Stellungen 18₁ und 18₂ beeinflusste Richtungen gelenkt werden. Alternativ oder zusätzlich zu der Steuereinrichtung 34 weist die Vorrichtung 10₂ eine Steuereinrichtung 44 auf, die konfiguriert ist, um die Strahlumlenkeinrichtung in die erste Stellung 18₁ zu steuern, um eine Abbildungsinformation des ersten Gesamtgesichtsfelds 26₁ von dem Bildsensor 12 zu erhalten. Zuvor oder danach ist die Steuereinrichtung 44 ausgebildet, um die Strahlumlenkeinrichtung 18 in die zweite Stellung 18₂ zu steuern, um eine Abbildungsinformation des zweiten Gesamtgesichtsfelds 26₂ von dem Bildsensor 12 zu erhalten. Die Steuereinrichtung 44 ist ausgebildet, um einen Teil der ersten Abbildungsinformation 46₁ in die zweite Abbildungsinformation 46₂ einzufügen, um eine gemeinsame oder akkumulierte Bildinformation 48 zu erhalten. Die akkumulierte Bildinformation 48 kann stellenweise das erste Gesamtgesichtsfeld 26₁ und stellenweise das zweite Gesamtgesichtsfeld 26₂ wiedergeben, wobei dies bildmanipulierende oder bildverarbeitende Schritte mitumfasst. Das bedeutet, die akkumulierte Bildinformation 48 basiert stellenweise auf einer Abbildung des Gesamtgesichtsfelds 26₁ und an anderen Stellen auf der Abbildung des Gesamtgesichtsfelds 26₂.

Die Steuereinrichtung 44 kann ausgebildet sein, um ein Signal 52 bereitzustellen, das die akkumulierte Bildinformation 48 enthält oder wiedergibt. Optional können auch die Bildinformationen 46₁ und/oder 46₂ durch das Signal 52 ausgegeben werden.

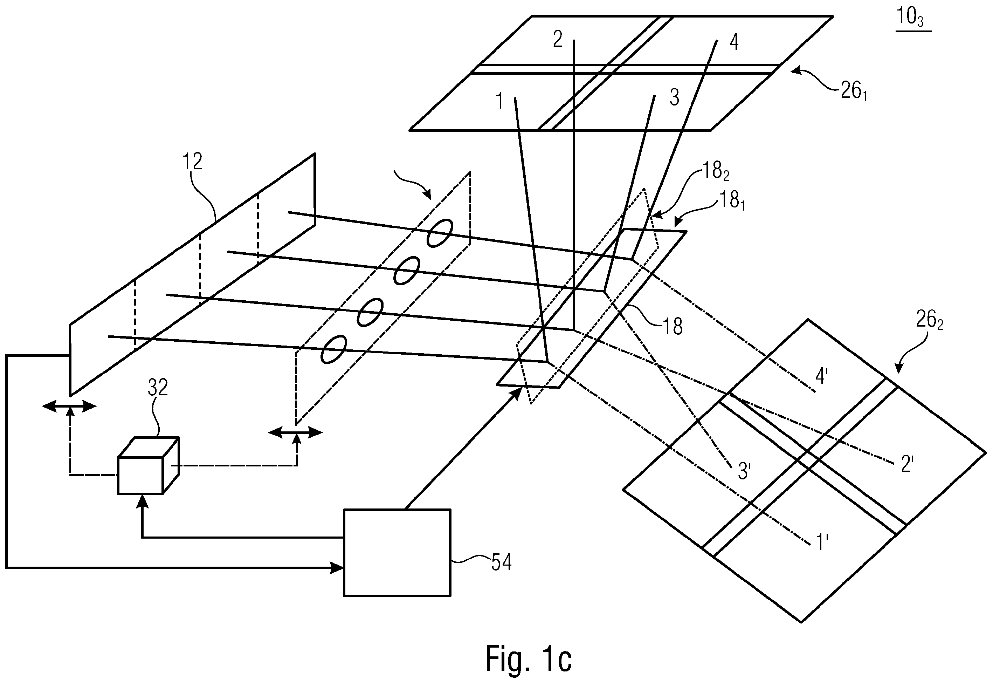

Fig. 1c zeigt eine schematische Ansicht einer Vorrichtung 10₃ gemäß einem Ausführungsbeispiel, die anstelle der Steuereinrichtung 34 aus Fig. 1a und anstelle der Steuereinrichtung 44 aus Fig. 1b eine Steuereinrichtung 54 aufweist, die die Funktionalität der Steuereinrichtung 34 und der Steuereinrichtung 44 kombiniert und ausgebildet ist, um basierend auf einer veränderlichen Fokuslage der Vorrichtung 10₃ die Tiefenkarte 38 zu erstellen und um die akkumulierte Bildinformation 48 aus Fig. 1b bereitzustellen.

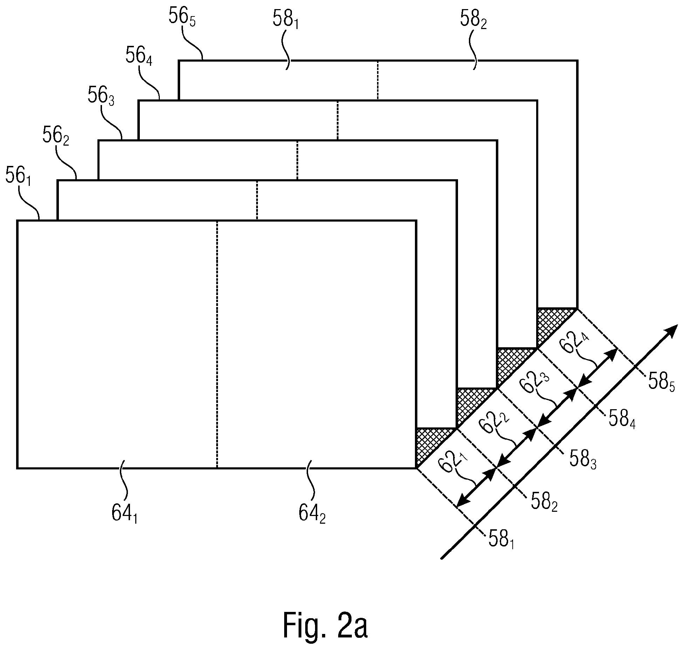

Fig. 2a zeigt eine schematische Ansicht unterschiedlicher Fokuslagen 56₁ bis 56₅, in welche eine Vorrichtung gemäß dem ersten Aspekt, beispielsweise die Vorrichtung 10₁ und die Vorrichtung 10₂ steuerbar ist. Die unterschiedlichen Fokuslagen 56₁ bis 56₅ können als Positionen oder Abstände 58₁ bis 58₅ verstanden werden, in denen Objekte in dem aufgenommenen Gesamtgesichtsfeld scharf auf den Bildsensor 12 abgebildet werden. Eine Anzahl der Fokuslagen 56 kann dabei beliebig sein und eine Anzahl von größer 1 aufweisen.

Abstände 62₁ bis 62₄ zwischen benachbarten Fokuslagen können sich auf Abstände im Bildraum beziehen, wobei eine Ausgestaltung oder Überführung der Erläuterung auf Abstände in dem Objektraum ebenfalls möglich ist. Vorteilhaft an einer Betrachtung des Bildraums ist jedoch, dass die Eigenschaften der bildgebenden Multiaperturabbildungsvorrichtung berücksichtigt werden, insbesondere im Hinblick auf einen minimalen bzw. maximalen Objektabstand. Die Steuereinrichtung 34 und/oder 54 kann ausgebildet sein, um die Multiaperturabbildungsvorrichtung so zu steuern, dass diese zwei oder eine höhere Anzahl der Fokuslagen 56₁ bis 56₅ aufweist. In der jeweiligen Fokuslage können Einzelbilder 64₁ und 64₂ entsprechend der Anzahl der aufgenommenen Teilgesichtsfelder 24 erfasst werden. Basierend auf der Kenntnis, welche der Fokuslagen 56₁ bis 56₅ zum Erhalt des jeweiligen Teilbilds 46₁ und 46₂ eingestellt wurde, kann die Steuereinrichtung durch Analyse der Bildinformation dahin gehend, welche der Bildteile scharf abgebildet sind, bestimmen, in welchem Abstand diese scharf abgebildeten Objekte bezüglich der Vorrichtung angeordnet sind. Diese Information bezüglich des Abstands kann für die Tiefenkarte 38 verwendet werden. Das bedeutet, die Steuereinrichtung kann ausgebildet sein, um in der Abfolge von Fokuslagen 56₁ bis 56₅ eine korrespondierende Anzahl von Gruppen von Teilbildern zu erfassen, wobei jedes Teilbild einem abgebildeten Teilgesichtsfeld zugeordnet ist. Die Gruppe von Teilbildern kann somit denjenigen Teilbildern entsprechen, die das Gesamtgesichtsfeld in der eingestellten Fokuslage abbilden.

Die Steuereinrichtung ist ausgebildet, um aus einem Vergleich von lokalen Bildschärfeinformationen in den Teilbildern die Tiefenkarte zu erstellen. Die lokale Schärfeinformation kann bezeichnen, in welchen Bereichen des Bildes Objekte scharf oder innerhalb eines zuvor festgelegten Toleranzbereichs scharf abgebildet werden. So kann beispielsweise über eine Bestimmung der Kantenverwaschungsfunktion sowie eine Detektion, über welche Abstände sich die Kanten erstrecken, bestimmt werden, ob ein entsprechender Bildbereich, ein entsprechendes Objekt oder ein Teil hiervon scharf abgebildet ist oder auf dem Bildsensor verschwommen abgebildet wird. Weiterhin kann die Punktbildoder die Linienverwaschungsfunktion als Gütekriterium für die Schärfe eines Bildinhaltes herangezogen werden. Alternativ oder zusätzlich kann jede bekannte optische Schärfe-Metrik, wie auch die bekannte Modulation Transfer Function (MTF) verwendet werden. Alternativ oder zusätzlich kann die Schärfe der gleichen Objekte in benachbarten Bildern des Stacks, die Zuordnung der Fokus-Aktuatorposition zum Objektabstand via einer kalibrierten Lookup-Table und/oder die Richtung des Through-Focus-Scans verwendet werden, um teils rekursiv aus benachbarten Bildern des Stacks die Tiefeninformation zu gewinnen und Doppeldeutigkeiten zu vermeiden. Unter Kenntnis der eingestellten Fokuslage, die eindeutig mit einen Objektabstand, der scharf abgebildet wird, korreliert ist, kann somit aus der Kenntnis, dass das Objekt, zumindest innerhalb des zuvor festgelegten Toleranzbereichs, scharf abgebildet ist, auf einen Abstand des Bereichs des Bilde, das Objekt oder des Teils hiervon geschlossen werden, was eine Grundlage für die Tiefenkarte 38 sein kann.

Unter Verwendung der Tiefenkarte ist die Steuereinrichtung ausgebildet, um die Teilbilder einer Gruppe von Teilbildern zu einem Gesamtbild zusammenzusetzen. Das bedeutet, die für das Stitching verwendete Tiefenkarte kann aus den zu stitchenden Teilbildern selbst erzeugt werden.

Die Vorrichtung kann ausgebildet sein, um die Fokussiereinrichtung 32 so zu steuern, dass die Abfolge von Fokuslagen 56₁ bis 56₅ innerhalb eines Toleranzbereichs von ± 25%, ±15% oder ±5%, bevorzugt möglichst nahe an 0% äquidistant im Bildraum zwischen einer minimalen Fokuslage und einer maximalen Fokuslage verteilt ist. Es ist hierbei zum Einsparen von Zeit zum Einstellen einer Fokuslage sinnvoll, jedoch nicht erforderlich, die Fokuslagen 56₁ bis 56₅ sequenziell nacheinander in zunehmendem oder abnehmendem Abstand anzusteuern. Vielmehr ist eine Reihenfolge der eingestellten Fokuslagen 56₁ bis 56₅ beliebig.

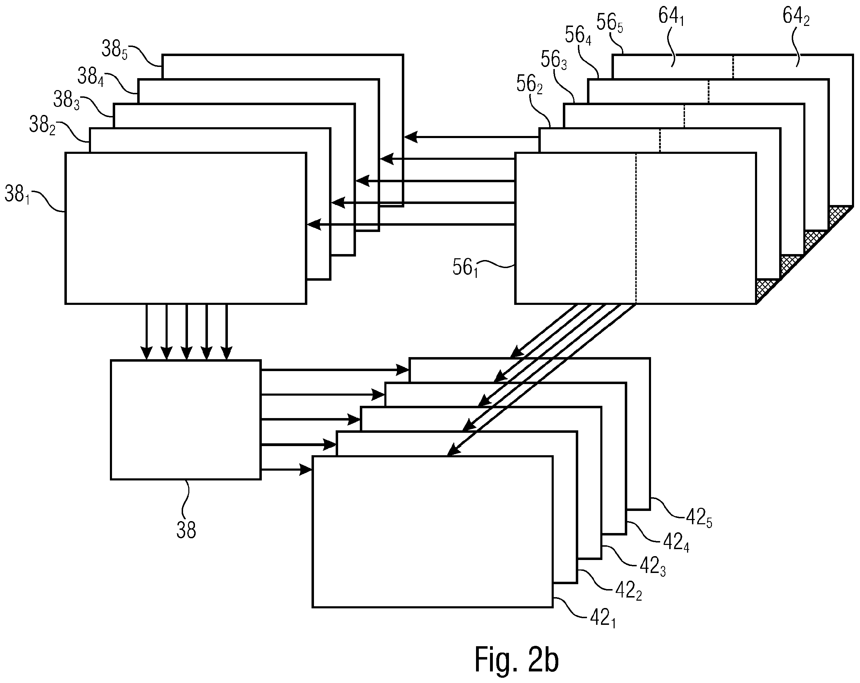

Fig. 2b zeigt eine schematische Darstellung der Verwendung der Tiefenkarte 38 sowie deren Generierung. Die Teilbilder 64₁ und 64₂ können jeweils verwendet werden, um Teilinformationen 38₁ bis 38₅ der Tiefenkarte 38 aus der jeweiligen Fokuslage 56₁ bis 56₅ zu erhalten, da jeweils die in den Einzelbildern 64₁ und 64₂ scharf dargestellten Objekte präzise bezüglich ihres Abstands bestimmt werden können. Zwischen den Fokuslagen 56₁ und 56₅ können jedoch auch Interpolations-Verfahren angewendet werden, so dass auch bei geringfügig unscharfen Objekten noch eine hinreichend genaue Information für die Tiefenkarte 38 erhalten werden kann. Die Abstandsinformationen, die in den Teilinformationen 38₁ bis 38₅ enthalten sind, können von der Steuereinrichtung zur Tiefenkarte 38 kombiniert werden. Die Tiefenkarte 38 kann verwendet werden, um die Einzelbilder 64₁ und 64₂ aus den unterschiedlichen Fokuslagen 56₁ bis 56₅ zu einer korrespondierenden Anzahl von Gesamtbildern 42₁ bis 42₅ zu kombinieren.

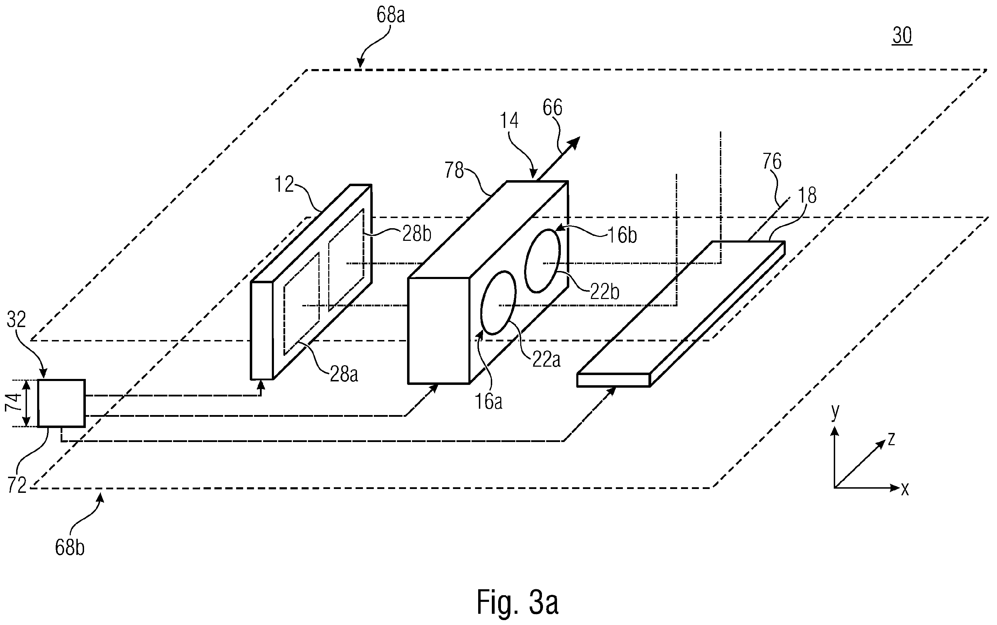

Fig. 3a zeigt eine schematische perspektivische Ansicht einer Vorrichtung 30 gemäß einem Ausführungsbeispiel. Der Bildsensor 12, das Array 14 und die Strahlumlenkeinrichtung 18 können einen Quader im Raum aufspannen. Der Quader kann auch als virtueller Quader verstanden werden und kann beispielsweise ein minimales Volumen und insbesondere eine minimale senkrechte Ausdehnung entlang einer Richtung parallel zu einer Dickenrichtung y aufweisen, die parallel zu einer Zeilenerstreckungsrichtung 66 ist. Die Zeilenerstreckungsrichtung 66 verläuft beispielsweise entlang einer z-Richtung und senkrecht zu einer x-Richtung, die parallel zu einem Verlauf der Strahlengänge zwischen dem Bildsensor 12 und dem Array 14 angeordnet ist. Die Richtungen x, y und z können ein kartesisches Koordinatensystem aufspannen. Das minimale Volumen des virtuellen Quaders bzw. die minimale senkrechte Ausdehnung desselben kann so geartet sein, dass der virtuelle Quader trotzdem den Bildsensor 12, das Array 14 und die Strahlumlenkeinrichtung 18 umfasst. Das minimale Volumen kann auch so verstanden werden, dass es einen Quader beschreibt, der durch die Anordnung und/oder betriebsgemäße Bewegung des Bildsensors 12, des Arrays 14 und/oder der Strahlumlenkeinrichtung 18 aufgespannt wird. Die Zeilenerstreckungsrichtung 66 kann dabei so angeordnet sein, dass entlang der Zeilenerstreckungsrichtung 66 die optischen Kanäle 16a und 16b nebeneinander, gegebenenfalls parallel zueinander, angeordnet sind. Die Zeilenerstreckungsrichtung 66 kann dabei ortsfest im Raum angeordnet sein.

Der virtuelle Quader kann zwei Seiten aufweisen, die gegenüberliegend parallel zueinander, parallel zu der Zeilenerstreckungsrichtung 66 des Arrays 14 sowie parallel zu einem Teil des Strahlengangs der optischen Kanäle 16a und 16b zwischen dem Bildsensor 12 und der Strahlumlenkeinrichtung 18 angeordnet sind. Vereinfacht, jedoch ohne einschränkende Wirkung, können dies beispielsweise eine Oberseite und eine Unterseite des virtuellen Quaders sein. Die zwei Seiten können eine erste Ebene 68a und eine zweite Ebene 68b aufspannen. Das heißt, die beiden Seiten des Quaders können jeweils Teil der Ebene 68a bzw. 68b sein. Weitere Komponenten der Multiaperturabbildungsvorrichtung können vollständig, zumindest aber teilweise innerhalb des Bereichs zwischen den Ebenen 68a und 68b angeordnet sein, so dass ein Bauraumbedarf der Multiaperturabbildungsvorrichtung entlang der y-Richtung, die parallel zu einer Oberflächennormalen der Ebenen 68a und/oder 68b ist, gering sein kann, was vorteilhaft ist. Ein Volumen der Multiaperturabbildungsvorrichtung kann einen geringen oder minimalen Bauraum zwischen den Ebenen 68a und 68b aufweisen. Entlang der lateralen Seiten oder Erstreckungsrichtungen der Ebenen 68a und/oder 68b kann ein Bauraum der Multiaperturabbildungsvorrichtung groß oder beliebig groß sein. Das Volumen des virtuellen Quaders ist beispielsweise von einer Anordnung des Bildsensors 12, des Arrays 14 und der Strahlumlenkeinrichtung 18 beeinflusst, wobei die Anordnung dieser Komponenten gemäß der hierin beschriebenen Ausführungsbeispiele so erfolgen kann, dass der Bauraum dieser Komponenten entlang der Richtung senkrecht zu den Ebenen und mithin der Abstand der Ebenen 68a und 68b zueinander gering oder minimal wird. Gegenüber anderen Anordnungen der Komponenten kann das Volumen und/oder der Abstand andere Seiten des virtuellen Quaders vergrößert sein.

Die Vorrichtung 30 umfasst einen Aktor 72 zum Erzeugen einer Relativbewegung zwischen dem Bildsensor 12, dem einzeiligen Array 14 und der Strahlumlenkeinrichtung 18. Dies kann beispielsweise eine Stellbewegung der Strahlumlenkeinrichtung 18 zum Umschalten zwischen den im Zusammenhang mit der Fig. 1b beschriebenen Positionen umfassen. Alternativ oder zusätzlich kann der Aktor 72 ausgebildet sein, um die im Zusammenhang mit der Fig. 1a erläuterte Relativbewegung zum Verändern der relativen Position zwischen dem Bildsensor 12 und dem Array 14 auszuführen. Der Aktor 72 ist zumindest teilweise zwischen den Ebenen 68a und 68b angeordnet. Der Aktor 72 kann ausgebildet sein, um zumindest eines aus dem Bildsensor 12, dem einzeiligen Array 14 und der Strahlumlenkeinrichtung 18 zu bewegen, wobei dies rotatorische und/oder translatorische Bewegungen entlang einer oder mehrerer Richtungen umfassen kann. Beispiele hierfür sind eine kanalindividuelle Änderung einer relativen Lage zwischen Bildsensorbereichen 28 eines jeweiligen optischen Kanals 16, der Optik 22 des jeweiligen optischen Kanals 16 und der Strahlumlenkeinrichtung 18 bzw. des entsprechenden Segments oder der entsprechenden Facette und/oder zum kanalindividuellen Ändern einer optischen Eigenschaft des die Umlenkung des Strahlengangs des jeweiligen optischen Kanals betreffenden Segments/Facette. Alternativ oder zusätzlich kann der Aktor 72 einen Autofokus und/oder eine optische Bildstabilisierung zumindest teilweise implementieren.

Der Aktor 72 kann Teil der Fokussiereinrichtung 32 sein und ausgebildet sein, um eine Relativbewegung zwischen zumindest einer Optik zumindest eines der optischen Kanäle 16a und 16b und dem Bildsensor 12 bereitzustellen. Die Relativbewegung zwischen der Optik 22a und/oder 22b und dem Bildsensor 12 kann von der Fokussiereinrichtung 32 so gesteuert werden, dass die Strahlumlenkeinrichtung 18 eine simultane Bewegung ausführt. Bei einem Verringern eines Abstands zwischen der Optik 22a und/oder 22b und dem Bildsensor kann der Abstand zwischen der Strahlumlenkeinrichtung 18 und dem Bildsensor 12 entsprechend verringert werden, so dass ein Relativabstand zwischen dem Array 14 bzw. der Optik 22a und/oder 22b und der Strahlumlenkeinrichtung 18 im Wesentlichen gleichbleibend ist. Dies ermöglicht, dass die Strahlumlenkeinrichtung 18 mit kleinen Strahlumlenkflächen ausgestaltet werden kann, da eine durch einen wachsenden Abstand zwischen dem Array 14 und der Strahlumlenkeinrichtung 18 wachsender Strahlenkegel durch die Beibehaltung des Abstands zur Strahlumlenkeinrichtung 18 kompensiert werden kann.

Die Fokussiereinrichtung 32 und/oder der Aktor 72 sind so angeordnet, dass sie um höchstens 50% aus dem Bereich zwischen den Ebenen 68a und 68b herausragen. Der Aktor 72 kann eine Abmessung oder Ausdehnung 74 parallel zu der Dickenrichtung y aufweisen. Ein Anteil von höchstens 50%, höchstens 30% oder höchstens 10% der Abmessung 74 kann ausgehend von einem Bereich zwischen den Ebenen 68a und 68b über die Ebene 68a und/oder 68b hinausragen und somit aus dem virtuellen Quader herausragen. Das bedeutet, dass der Aktor 72 höchstens unwesentlich über die Ebene 68a und/oder 68b hinausragt. Gemäß Ausführungsbeispielen ragt der Aktor 72 nicht über die Ebenen 68a und 68b hinaus. Vorteilhaft daran ist, dass eine Ausdehnung der Multiaperturabbildungsvorrichtung entlang der Dickenrichtung y durch den Aktor 72 nicht vergrößert wird.

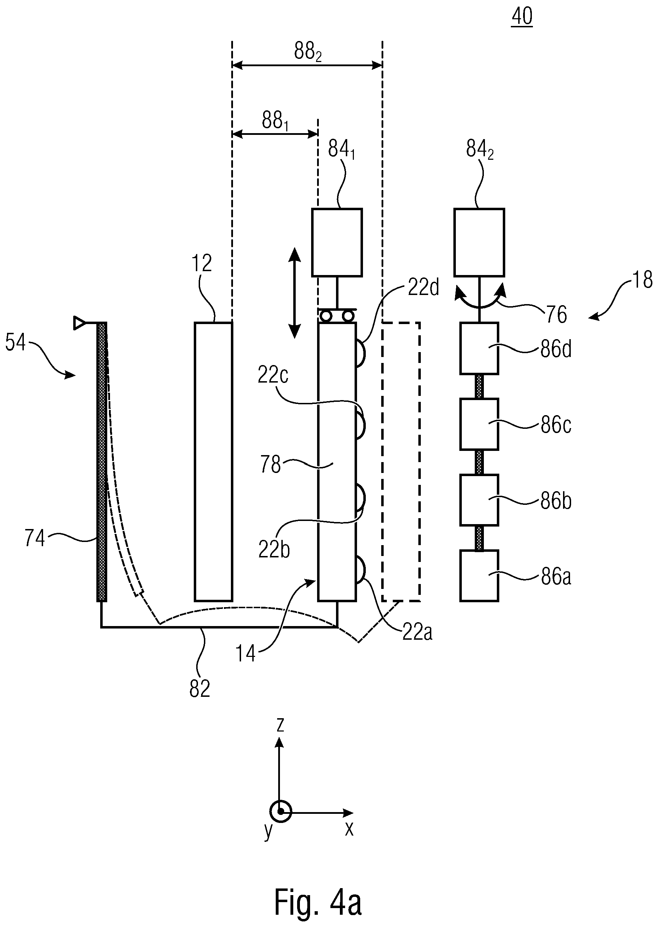

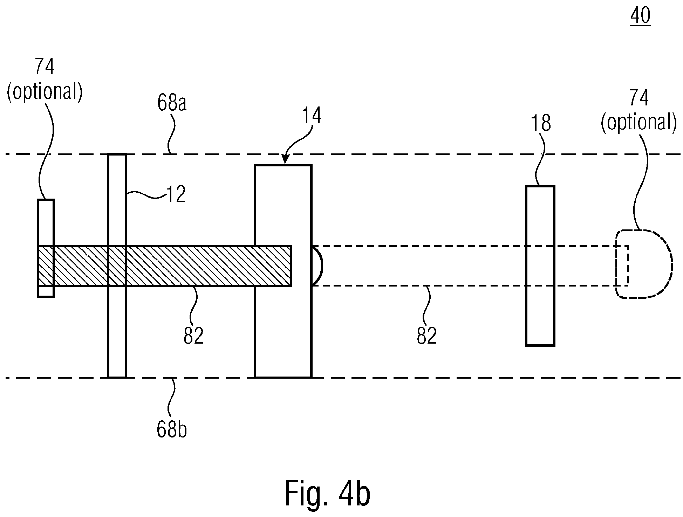

Obwohl die Strahlumlenkeinrichtung 18 so dargestellt ist, dass sie um eine Rotationsachse 76 rotatorisch gelagert ist, kann der Aktor 72 alternativ oder zusätzlich auch eine translatorische Bewegung entlang einer oder mehrerer Raumrichtungen erzeugen. Der Aktor 72 kann einen oder mehrere Einzelaktoren umfassen, möglicherweise, um verschiedene Einzelbewegungen einzeln ansteuerbar zu erzeugen. Der Aktor 72 oder zumindest ein Einzelaktor hiervon kann bspw. als ein im Zusammenhang mit Fig. 4 näher beschriebener Piezoaktor, insbesondere ein piezoelektrischer Biegeaktor, implementiert sein oder diesen umfassen. Ein Piezobieger ermöglicht eine schnelle und reproduzierbare Positionsänderung. Diese Eigenschaft erlaubt vorteilhaft die Aufnahme von Fokusstacks im Sinne mehrerer oder vieler Abbildungen in kurzer Zeit. Piezobieger als entlang einer Dimension oder Richtung lang ausgeführte Aktoren sind insbesondere in der beschriebenen Architektur vorteilhaft einsetzbar, da sie einen dafür vorteilhaften Formfaktor aufweisen, also ein Ausdehnung besonders in einer Richtung.

Das Array 14 kann ein Substrat 78 umfassen, an dem die Optiken 22a und 22b befestigt oder angeordnet sind. Das Substrat 78 kann durch Aussparungen oder geeignete Materialwahl für die Strahlengänge der optischen Kanäle 16a und 16b zumindest teilweise transparent sein, wobei dies nicht ausschließt, dass beispielsweise durch Anordnung von Filterstrukturen oder dergleichen auch Manipulationen in den optischen Kanälen ausgeführt werden.

Mehrere Anforderungen an den Aktor 72, darunter eine schnelle Justierbarkeit zum schnellen Einstellen der unterschiedlichen Fokuslagen 56, eine hohe Kraft bei geringem Bauraumbedarf und dergleichen kann durch die Verwendung von piezoelektrischen Aktoren erhalten werden.

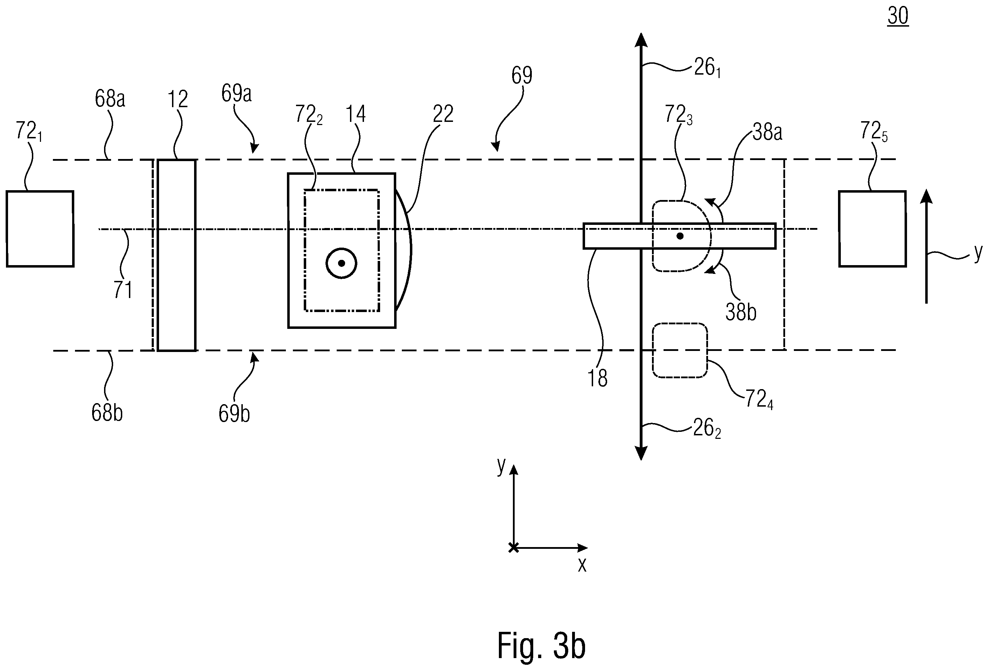

Fig. 3b zeigt eine schematische Seitenschnittansicht der Vorrichtung 30 gemäß einem Ausführungsbeispiel. Die Multiaperturabbildungsvorrichtung der Vorrichtung 30 kann bspw. eine Mehrzahl von Aktoren aufweisen, bspw. mehr als einen, mehr als zwei oder eine andere Anzahl >0. Bspw. können Aktoren 72₁ bis 72₅ angeordnet sein, die für unterschiedliche Zwecke einsetzbar sind, etwa zur Anpassung der Fokuslage und/oder Veränderung der Lage oder Position der Strahlumlenkeinrichtung 18 zum Einstellen der Blickrichtung der Multiaperturabbildungsvorrichtung und/oder zum Bereitstellen einer optischen Bildstabilisierung durch rotatorische Bewegung der Strahlumlenkeinrichtung 18 und/oder translatorische Bewegung des Arrays 14.

Die Aktoren 72₁ bis 72₅ können so angeordnet ein, dass sie zumindest teilweise zwischen den zwei Ebenen 68a und 68b angeordnet sind, die durch Seiten 69a und 69b des virtuellen Quaders 69 aufgespannt werden. Die Seiten 69a und 69b des Quaders 69 können parallel zueinander sowie parallel zu der Zeilenerstreckungsrichtung des Arrays und eines Teils des Strahlengangs der optischen Kanäle zwischen dem Bildsensor 12 und der Strahlumlenkeinrichtung 18 parallel ausgerichtet sein. Das Volumen des Quaders 69 ist minimal und umfasst dennoch den Bildsensor 12, das Array 14 und die Strahlumlenkeinrichtung 18 sowie deren betriebsbedingte Bewegungen. Optische Kanäle des Arrays 14 weisen eine Optik 22 auf, die für jeden optischen Kanal gleich oder verschieden von einander gebildet sein kann.

Ein Volumen der Multiaperturabbildungsvorrichtung kann einen geringen oder minimalen Bauraum zwischen den Ebenen 68a und 68b aufweisen. Entlang der lateralen Seiten oder Erstreckungsrichtungen der Ebenen 68a und/oder 68b kann ein Bauraum der Multiaperturabbildungsvorrichtung groß oder beliebig groß sein. Das Volumen des virtuellen Quaders ist bspw. von einer Anordnung des Bildsensors 12, des einzeiligen Arrays 14 und der Strahlumlenkeinrichtung beeinflusst, wobei die Anordnung dieser Komponenten gemäß der hierin beschriebenen Ausführungsbeispiele so erfolgen kann, dass der Bauraum dieser Komponenten entlang der Richtung senkrecht zu den Ebenen und mithin der Abstand der Ebenen 68a und 68b zueinander gering oder minimal wird. Gegenüber anderen Anordnungen der Komponenten kann das Volumen und/oder der Abstand anderer Seiten des virtuellen Quaders vergrößert sein.

Durch gepunktete Linien ist der virtueller Quader 69 dargestellt. Die Ebenen 68a und 68b können zwei Seiten des virtuellen Quaders 69 umfassen oder dadurch aufgespannt sein. Eine Dickenrichtung y der Multiaperturabbildungsvorrichtung kann normal zu den Ebenen 68a und/oder 68b und/oder parallel zu der y-Richtung angeordnet sein.

Der Bildsensor 12, das Array 14 und die Strahlumlenkeinrichtung 18 können so angeordnet sein, dass ein senkrechter Abstand zwischen den Ebenen 68a und 68b entlang der Dickenrichtung y, der vereinfachend jedoch ohne einschränkende Wirkung als Höhe des Quaders bezeichnet werden kann, minimal ist, wobei auf eine Minimierung des Volumens, das bedeutet der anderen Abmessungen des Quaders verzichtet werden kann. Eine Ausdehnung des Quaders 69 entlang der Richtung y kann minimal und im Wesentlichen durch die Ausdehnung der optischen Komponenten der Abbildungskanäle, d. h., des Arrays 14, des Bildsensors 12 und der Strahlumlenkeinrichtung 18 entlang der Richtung y vorgegeben sein.

Ein Volumen der Multiaperturabbildungsvorrichtung kann einen geringen oder minimalen Bauraum zwischen den Ebenen 68a und 68b aufweisen. Entlang der lateralen Seiten oder Erstreckungsrichtungen der Ebenen 68a und/oder 68b kann ein Bauraum der Multiaperturabbildungsvorrichtung groß oder beliebig groß sein. Das Volumen des virtuellen Quaders ist bspw. von einer Anordnung des Bildsensors 12, des einzeiligen Arrays 14 und der Strahlumlenkeinrichtung beeinflusst, wobei die Anordnung dieser Komponenten gemäß der hierin beschriebenen Ausführungsbeispiele so erfolgen kann, dass der Bauraum dieser Komponenten entlang der Richtung senkrecht zu den Ebenen und mithin der Abstand der Ebenen 68a und 68b zueinander gering oder minimal wird. Gegenüber anderen Anordnungen der Komponenten kann das Volumen und/oder der Abstand anderer Seiten des virtuellen Quaders vergrößert sein.

Die Aktoren 72₁ bis 72₅ können jeweils eine Abmessung oder Ausdehnung parallel zu der Richtung y aufweisen. Ein Anteil von höchstens 50 %, höchstens 30 % oder höchstens 10 % der Abmessung des jeweiligen Aktors 72₁ bis 72₅ kann ausgehend von einem Bereich zwischen den beiden Ebenen 68a und 68b über die Ebene 68a und/oder 68b hinausragen oder aus dem Bereich herausragen. Das bedeutet, dass die Aktoren 72₁ bis 72₅ höchstens unwesentlich über die Ebene 68a und/oder 68b hinausragen. Gemäß Ausführungsbeispielen ragen die Aktoren nicht über die Ebenen 68a und 68b hinaus. Vorteilhaft daran ist, dass eine Ausdehnung der Multiaperturabbildungsvorrichtung entlang der Dickenrichtung bzw. Richtung y durch die Aktoren nicht vergrößert wird.

Obwohl hier verwendete Begriffe wie oben, unten, links, rechts, vorne oder hinten zur besseren Anschaulichkeit verwendet werden, sollen diese keinerlei einschränkende Wirkung entfalten. Es versteht sich, dass basierend auf einer Drehung oder Verkippung im Raum diese Begriffe wechselseitig vertauschbar sind. Beispielsweise kann die x-Richtung von dem Bildsensor 12 ausgehend hin zu der Strahlumlenkeinrichtung 18 als vorne oder vorwärts verstanden werden. Eine positive y-Richtung kann beispielsweise als oben verstanden werden. Ein Bereich entlang der positiven oder negativen z-Richtung abseits oder beabstandet des Bildsensors 12, des Arrays 14 und/oder der Strahlumlenkeinrichtung 18 kann als neben der jeweiligen Komponente verstanden werden. Vereinfacht ausgedrückt kann ein Bildstabilisator zumindest einen der Aktoren 72₁ bis 72₅. Der zumindest eine kann in einer Ebene 71 bzw. zwischen den Ebenen 68a und 68b angeordnet sein.

In anderen Worten können die Aktoren 72₁ bis 72₅ vor, hinter oder neben dem Bildsensor 12, dem Array 14 und/oder der Strahlumlenkeinrichtung 18 angeordnet sein. Gemäß Ausführungsbeispielen sind die Aktoren 36 und 42 mit einem maximalen Umfang von 50 %, 30 % oder 10 % außerhalb des Bereichs zwischen den Ebenen 68a und 68b angeordnet.

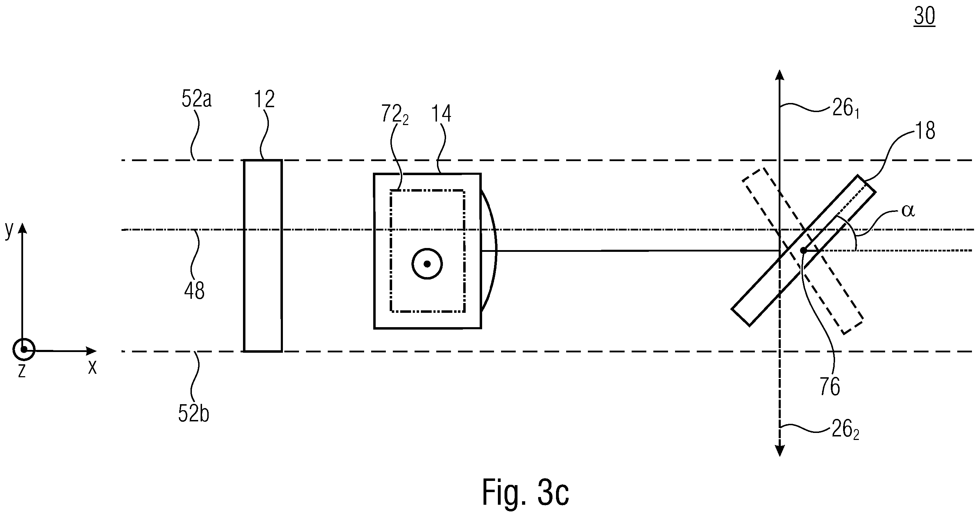

Fig. 3c zeigt eine schematische Seitenschnittansicht der Multiaperturabbildungsvorrichtung wobei basierend auf unterschiedlichen Stellungen der Strahlumlenkeinrichtung 18 unterschiedliche Gesamtgesichtsfelder 26₁ und 26₂ erfassbar sind, da die Multiaperturabbildungsvorrichtung dann verschiedene Blickrichtungen aufweist. Die Multiaperturabbildungsvorrichtung kann ausgebildet sein, um eine Verkippung der Strahlumlenkeinrichtung um eine Winkel α zu verändern, so dass wechselweise unterschiedliche Hauptseiten der Strahlumlenkeinrichtung 18 dem Array 14 zugewandt angeordnet sind. Die Multiaperturabbildungsvorrichtung kann einen Aktor umfassen, der ausgebildet ist, um die Strahlumlenkeinrichtung 18 um die Rotationsachse 76 zu verkippen. Beispielsweise kann der Aktor ausgebildet sein, um die Strahlumlenkeinrichtung 18 in eine erste Stellung zu bewegen, in der die Strahlumlenkeinrichtung 18 den Strahlengang 26 der optischen Kanäle des Arrays 14 in die positive y-Richtung umlenkt. Hierfür kann die Strahlumlenkeinrichtung 18 in der ersten Position, beispielsweise einen Winkel α von > 0° und < 90°, von zumindest 10° und höchstens 80° oder von zumindest 30° und höchstens 50°, beispielsweise 45° aufweisen. Der Aktor kann ausgebildet sein, um die Strahlumlenkeinrichtung in einer zweiten Stellung so um die Rotationsachse 76 auszulenken, dass die Strahlumlenkeinrichtung 18 den Strahlengang der optischen Kanäle des Arrays 14 hin zu der negativen y-Richtung umlenkt, wie es durch die Blickrichtung zum Gesamtgesichtsfeld 26₂ und die gestrichelte Darstellung der Strahlumlenkeinrichtung 18 dargestellt ist. Beispielsweise kann die Strahlumlenkeinrichtung 18 beidseitig reflektierend ausgebildet sein, so dass in der ersten Stellung die Blickrichtung hin zum Gesamtgesichtsfeld 26₁ weist.

Fig. 4a zeigt eine schematische Aufsicht auf eine Vorrichtung 40 gemäß einem Ausführungsbeispiel, bei der der Aktor 72 als piezoelektrischer Biegeaktor gebildet ist. Der Aktor 72 ist ausgebildet, um eine Biegung in der x/z-Ebene auszuführen, wie es durch die gestrichelten Linien dargestellt ist. Der Aktor 72 ist über eine mechanische Umlenkeinrichtung 82 mit dem Array 14 verbunden, so dass bei einer Biegung des Aktors 72 eine laterale Verschiebung des Arrays 14 entlang der x-Richtung erfolgen kann, so dass die Fokuslage verändert werden kann. Beispielsweise kann der Aktor 72 mit dem Substrat 78 verbunden sein. Alternativ kann der Aktor 72 auch an einem Gehäuse, das zumindest einen Teil der Optiken 22a bis 22d haust, angeordnet sein, um das Gehäuse zu bewegen. Andere Varianten sind ebenfalls möglich.

Optional kann die Vorrichtung 40 weitere Aktoren 84₁ und 84₂ aufweisen, die konfiguriert sind, um eine Bewegung an dem Array 14 und/oder der Strahlumlenkeinrichtung 18 zu erzeugen, etwa zum Stellen der Strahlumlenkeinrichtung 18 in unterschiedliche Positionen oder Stellungen und/oder zur optischen Bildstabilisierung durch translatorisches Verschieben des Arrays 14 entlang der z-Richtung und/oder durch Erzeugen einer Rotationsbewegung der Strahlumlenkeinrichtung 18 um die Rotationsachse 76.

Anders als in den vorangehenden Figuren beschrieben, kann die Strahlumlenkeinrichtung 18 mehrere voneinander beabstandete aber gemeinsame bewegliche Facetten 86a bis 86d aufweisen, wobei jeder optische Kanal einer Facette 86a bis 86d zugeordnet ist. Die Facetten 86a bis 86d können auch direkt benachbart, d. h. mit geringem oder keinem Abstand zueinander angeordnet sein. Alternativ kann auch ein ebener Spiegel angeordnet sein.

Durch Aktuierung des Aktors 72 kann ein Abstand 88₁ zwischen zumindest einer der Optiken 22a-d und dem Bildsensor 12 von einem ersten Wert 88₁ hin zu einem zweiten Wert 88₂ verändert werden, beispielsweise vergrößert oder verkleinert.

Fig. 4b zeigt eine schematische Seitenschnittansicht der Vorrichtung 40 zur Verdeutlichung der Anordnung des Aktuators 72 zwischen den Ebenen 68a und 68b, die im Zusammenhang mit der Fig. 3a beschrieben sind. Der Aktor 72 ist beispielsweise vollständig zwischen den Ebenen 68a und 68b angeordnet, ebenso wie die mechanische Umlenkeinrichtung 82, die mehrere kraftübertragende Elemente, beispielsweise Verbindungsstege, Drähte. Seile oder dergleichen und mechanische Lager oder Umlenkelemente aufweisen kann.

Die mechanische Umlenkeinrichtung bzw. mechanische Einrichtung zum Übertragen der Bewegung an das Array 14 kann dabei an einer Seite des Bildsensors 12 angeordnet sein, die dem Array 14 abgewandt ist, d. h, ausgehend von dem Array 14 hinter dem Bildsensor 12. Die mechanische Einrichtung 82 kann dabei so angeordnet sein, dass ein Kraftfluss lateral an dem Bildsensor 12 vorbeiläuft. Alternativ oder zusätzlich kann der Aktor 72 oder ein anderer Aktor an einer dem Array 14 abgewandten Seite der Strahlumlenkeinrichtung 18 angeordnet sein, d. h., ausgehend von dem Array 14 hinter der Strahlumlenkeinrichtung 18. Die mechanische Einrichtung 82 kann so angeordnet sein, dass ein Kraftfluss lateral an der Strahlumlenkeinrichtung 18 vorbeiläuft.

Obwohl lediglich ein Aktor 72 dargestellt ist, kann auch eine höhere Anzahl von Aktoren angeordnet werden und/oder mehr als eine Seite des Aktors 72 mit einer mechanischen Umlenkeinrichtung 82 verbunden sein. So kann beispielsweise ein mittig gelagerter oder abgestützter Aktor 72 zweiseitig mit jeweils einer mechanischen Umlenkeinrichtung 82 verbunden sein und beispielsweise an beiden Seiten des Arrays 14 angreifen, um eine homogene Bewegung zu ermöglichen.

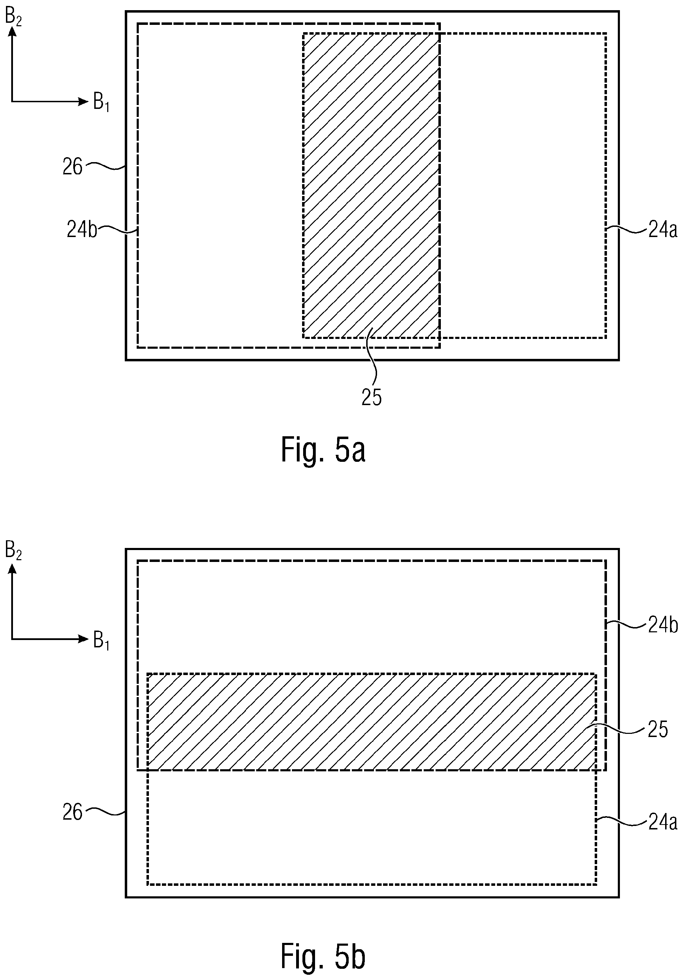

Fig. 5a zeigt eine schematische Darstellung einer Anordnung von Teilgesichtsfeldern 24a und 24b in einem Gesamtgesichtsfeld 26, das beispielsweise durch eine hierin beschriebene Multiaperturabbildungsvorrichtung, etwa die Multiaperturabbildungsvorrichtung 10₁, 10₂, 10₃, 30 und/oder 40 erfassbar ist und bspw. dem Gesamtgesichtsfeld 26₁ und/oder 26₂ entsprechen kann. Beispielsweise kann das Gesamtgesichtsfeld 26 mit dem optischen Kanal 16b auf dem Bildsensorbereich 28b abgebildet werden. Beispielsweise kann der optische Kanal 16a konfiguriert sein, um das Teilgesichtsfeld 24a zu erfassen und auf den Bildsensorbereich 28a abzubilden. Ein anderer optischer Kanal, etwa der optische Kanal 16c kann ausgebildet sein, um das Teilgesichtsfeld 24b zu erfassen und auf dem Bildsensorbereich 28c abzubilden. Das bedeutet, dass eine Gruppe von optischen Kanälen ausgebildet sein kann, um genau zwei Teilgesichtsfelder 24a und 24b zu erfassen. Es kann somit eine zeitgleiche Erfassung des Gesamtgesichtsfeldes und der Teilgesichtsfelder, die gemeinsam wiederrum das Gesamtgesichtsfeld 26 abbilden, erfolgen.

Obwohl zur besseren Unterscheidbarkeit mit unterschiedlicher Ausdehnung dargestellt, können die Teilgesichtsfelder 24a und 24b entlang zumindest einer Bildrichtung B₁ oder B₂ eine gleiche oder vergleichbare Ausdehnung aufweisen, etwa entlang der Bildrichtung B₂. Die Ausdehnung der Teilgesichtsfelder 24a und 24b kann identisch zu der Ausdehnung des Gesamtgesichtsfelds 26 entlang der Bildrichtung B₂ sein. Das bedeutet, die Teilgesichtsfelder 24a und 24b können das Gesamtgesichtsfeld 26 entlang der Bildrichtung B₂ vollständig erfassen oder aufnehmen und entlang einer anderen senkrecht hierzu angeordneten Bildrichtung B₁ das Gesamtgesichtsfeld nur teilweise erfassen oder aufnehmen und versetzt zueinander angeordnet sein, so dass sich kombinatorisch auch entlang der zweiten Richtung eine vollständige Erfassung des Gesamtgesichtsfeldes 26 ergibt. Hierbei können die Teilgesichtsfelder 24a und 24b disjunkt zueinander sein oder höchstens unvollständig in einem Überlappbereich 25, der sich entlang der Bildrichtung B₂ in dem Gesamtgesichtsfeld 26 möglicherweise vollständig erstreckt, miteinander überlappen. Eine Gruppe von optischen Kanälen umfassend die optischen Kanäle 16a und 16c kann ausgebildet sein, um zusammengenommen das Gesamtgesichtsfeld 26 vollständig abzubilden, etwa durch eine Gesamtaufnahme in Kombination mit Teilaufnahmen, die zusammengenommen das Gesamtgesichtsfeld abbilden. Die Bildrichtung B₁ kann beispielsweise eine Horizontale eines bereitzustellenden Bilds sein. Vereinfacht stellen die Bildrichtungen B₁ und B₂ zwei beliebig im Raum stehende unterschiedliche Bildrichtungen dar.

Fig. 5b zeigt eine schematische Darstellung einer Anordnung der Teilgesichtsfelder 24a und 24b, die entlang einer anderen Bildrichtung, der Bildrichtung B₂, versetzt zueinander angeordnet sind und sich gegenseitig überlappen. Die Teilgesichtsfelder 24a und 24b können das Gesamtgesichtsfeld 26 entlang der Bildrichtung B₁ jeweils vollständig und entlang der Bildrichtung B₂ unvollständig erfassen. Der Überlappbereich 25 ist beispielsweise vollständig in dem Gesamtgesichtsbereich 26 entlang der Bildrichtung B₁ angeordnet.

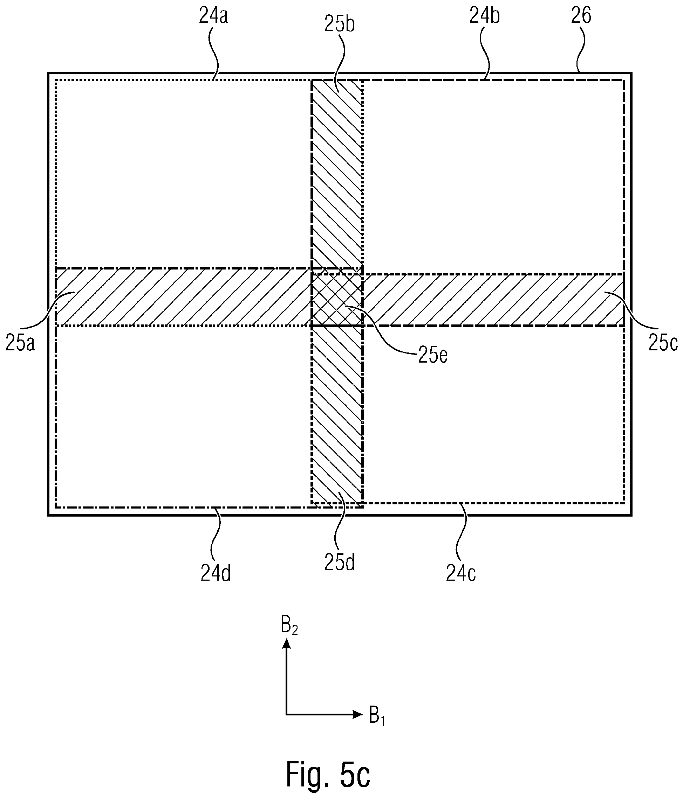

Fig. 5c zeigt eine schematische Darstellung von vier Teilgesichtsfeldern 24a bis 24b, die das Gesamtgesichtsfeld 26 in jeweils beiden Richtungen B₁ und B₂ unvollständig erfassen. Zwei benachbarte Teilgesichtsfelder 24a und 24b überlappen sich in einem Überlappungsbereich 25b. Zwei überlappende Teilgesichtsfelder 24b und 24c überlappen sich in einem Überlappungsbereich 25c. In ähnlicher Weise überlappen sich Teilgesichtsfelder 24c und 24d in einem Überlappungsbereich 25d und das Teilgesichtsfelder 24d mit dem Teilgesichtsfelder 24a in einem Überlappbereich 25a. Alle vier Teilgesichtsfelder 24a bis 24d können sich in einem Überlappbereich 25e des Gesamtgesichtsfelds 26 überlappen.

Zur Erfassung des Gesamtgesichtsfelds 26 und der Teilgesichtsfelder 24a-d kann eine Multiaperturabbildungsvorrichtung ähnlich wie im Zusammenhang mit Fig. 1a-c beschrieben ausgebildet sein, wobei das Array 14 beispielsweise fünf Optiken aufweisen kann, vier zur Erfassung von Teilgesichtsfeldern 24a-d und eine Optik zur Erfassung des Gesamtgesichtsfelds 26. Entsprechend kann das Array im Zusammenhang mit den Fig. 5a-b mit drei optischen Kanälen ausgeführt sein.

In den Überlappbereichen 25a bis 25e steht eine hohe Anzahl von Bildinformationen zur Verfügung. So wird beispielsweise der Überlappbereich 25b über das Gesamtgesichtsfeld 26, das Teilgesichtsfeld 24a und das Teilgesichtsfeld 24b erfasst. Ein Bildformat des Gesamtgesichtsfelds kann einer redundanzfreien Kombination der abgebildeten Teilgesichtsfelder entsprechen, beispielsweise der Teilgesichtsfelder 24a-d in Fig. 5c, wobei die Überlappbereiche 25a-e jeweils nur einfach gezählt werden. Im Zusammenhang mit den Fig. 5a und 5b gilt dies für die redundanzfreie Kombination der Teilgesichtsfelder 24a und 24b.

Ein Überlapp in den Überlappbereichen 25 und/oder 25a-e kann bspw. höchstens 50 %, höchstens 35 % oder höchstens 20 % der jeweiligen Teilbilder umfassen.

In anderen Worten kann gemäß dem ersten Aspekt eine Reduktion der Zahl der optischen Kanäle erhalten werden, was eine Kosteneinsparung ermöglicht und eine Verringerung der lateralen Bauraumbeanspruchung ermöglicht. Gemäß dem ersten Aspekt wird eine zu einer stereoskopen Erfassung alternative Form der Tiefeninformationsgewinnung ermöglicht, die ohne entsprechende zusätzliche Sensoren wie Time of Flight (Lichtlaufzeitmessung), Structured or Coded Light (strukturiertes oder kodiertes Licht) und dergleichen auskommen. Time of Flight-Sensoren, die eine geringe Auflösung ermöglichen, sowie Structured Light-Sensoren, die einen hohen Energiebedarf aufweisen, können somit vermieden werden. Beide Ansätze haben weiterhin Probleme bei starker Umgebungsbeleuchtung, insbesondere Sonnenlicht. Ausführungsbeispiele sehen vor, dass die entsprechende Vorrichtung ohne derartige Sensoren ausgeführt ist. Gemäß einem Ausführungsbeispiel dient ein Piezobieger als extrem schneller Fokus-Faktor mit geringer Leistungsaufnahme. Ausführungsformen sehen jedoch vor, die Gewinnung von Tiefeninformationen aus der Abfolge von Fokuslagen mit einer Gewinnung von Tiefeninformationen aus disparitätsbasierten Tiefeninformationen zu kombinieren. Bevorzugt ist hierbei, zunächst eine disparitätsbasierte Tiefenkarte zu erstellen, und für den Fall, dass diese Mängel aufweist, diese durch die zusätzlichen Tiefeninformationen durch die Abfolge von Fokuslagen zu ergänzen, zu korrigieren oder zu verbessern. Die beschriebene Architektur der Multiaperturabbildungsvorrichtung ermöglicht die Verwendung solcher Piezobieger, da ein sonst kubischer Formfaktor des Kameramoduls den Einsatz von langen Piezobiegern erschwert oder gar ausschließt. Bei kurzer Belichtungszeit erlaubt dies die Aufnahme von Fokus-Stacks, d. h., zahlreiche schnell nacheinander aufgenommene Bilder mit leicht unterschiedlicher Fokussierung der Szene. Ausführungsbeispiele sehen vor, dass die gesamte Tiefe der Szene sinnvoll abgetastet wird, etwa von Makro, die nähest mögliche Aufnahme, bis unendlich, das bedeutet, die weitest mögliche Entfernung. Die Abstände können äquidistant im Objektraum, bevorzugt aber im Bildraum angeordnet sein. Alternativ kann auch ein anderer sinnvoller Abstand gewählt werden. Eine Anzahl der Fokuslagen beträgt beispielsweise zumindest zwei, zumindest drei, zumindest fünf, zumindest zehn, zumindest 20 oder eine andere beliebige Anzahl.

Dem Benutzer können mehrere Bilder 42 dargestellt werden. Alternativ oder zusätzlich sehen Ausführungsbeispiele vor, die einzelnen Bildinformationen zu kombinieren, so dass dem Benutzer ein Bild bereitgestellt werden kann, das eine kombinierte Bildinformation aufweist. Beispielsweise ein Bild mit Tiefeninformation, was beispielsweise die Möglichkeit zu einer digitalen Neufokussierung bietet. Das dargestellte Bild kann einen sogenannten Bokeh-Effekt, eine Unscharfstellung, bieten. Alternativ kann das Bild auch so dargestellt werden, dass das gesamte Bild künstlich scharf ist, das bedeutet, ein größerer Abstandsbereich als in den Einzelbildern von Teilbereichen ist scharfgestellt, beispielsweise das gesamte Bild. Bei geringer Blendenzahl der verwendeten Objektive kann sich aus der in dem Einzelbildern gemessene Schärfe bzw. Unschärfe und weiteren Informationen, etwa Schärfe der gleichen Objekte in benachbarten Bildern des Stacks, einer Zuordnung der Fokus-Aktuatorposition zu einem Objektabstand, etwa unter Nutzung einer kalibrierten Lookup-Tabelle, einer Richtung der Fokuslagenabfolge (engl.: Through-Focus-Scan) für sich aber auch rekursiv aus anderen Bildern, um Doppeldeutigkeiten zu vermeiden, der Objektabstand der einzelnen Elemente der Szene rekonstruieren und daraus eine Tiefenkarte in Bildauflösung erstellen.

Gemäß dem ersten Aspekt wird erreicht, dass eine Duplizierung der Kanäle für eine Stereo-Abbildung entfallen kann und dennoch eine Tiefenkarte erstellt werden kann. Diese Tiefenkarte ermöglicht das Bildstitching der unterschiedlichen Teilbilder der Multiaperturabbildungsvorrichtung. Durch die beispielweise Halbierung der Anzahl der optischen Kanäle kann eine deutliche Reduktion der lateralen Dimensionen, etwa entlang der Zahlenerstreckungsrichtung, erhalten werden und damit auch eine Preisreduktion erhalten werden. Die Bildverarbeitung kann durch andere Schritte mindestens ebenso gute Bilder liefern. Alternativ oder zusätzlich wird ermöglicht, dass auf eine zusätzliche Anordnung von Time of Flight-Sensoren oder Structured Light-Sensoren verzichtet werden kann. Dieser Vorteil bleibt erhalten, selbst wenn die erwähnte Duplizierung doch ausgeführt wird, was ebenfalls Vorteile bieten kann.

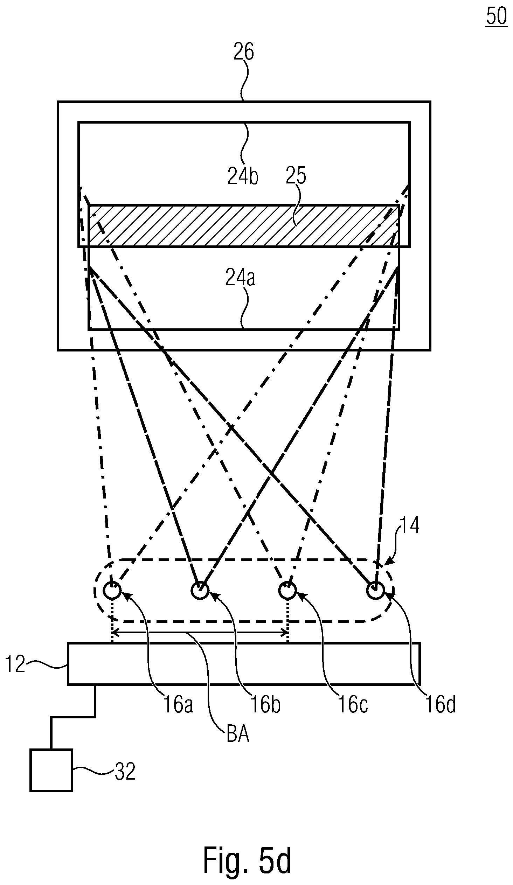

So kann bspw. das Gesamtgesichtsfeld 26 zumindest stereoskop erfasst werden, wie es bspw. in DE 10 2013 222 780 A1 beschrieben ist, um aus der mehrfachen, d. h., zumindest zweifachen Erfassung des Gesamtgesichtsfeldes bzw. der Teilgesichtsfelder 24 Tiefeninformationen zu gewinnen. Die zumindest stereoskope Erfassung, die bspw. in Fig. 5d dargestellt ist, ermöglicht eine Gewinnung von Tiefeninformationen durch die Betrachtung desselben Teilgesichtsfeldes 24a oder 24b durch zwei mit einem Basisabstand BA beabstandeten optischen Kanälen 16a und 16c bzw. 16c und 16d. Eine Anzahl der Teilgesichtsfelder ist dabei ebenso frei wählbar wie eine Anordnung derselben, siehe beispielhaft die Unterscheide in den Fig. 5a-c. Vorteilhaft im Hinblick auf die Vermeidung von Okklusionen ist die in Fig. 5d dargestellte Anordnung der Teilgesichtsfelder gemäß Fig. 5b.

In Fig. 5d ist lediglich ein Teil einer Multiaperturabbildungsvorrichtung 50 gezeigt. Elemente wie die Strahlumlenkeinrichtung 18 oder Aktuatoren sind nicht dargestellt. Es bestehen nun für die Multiaperturabbildungsvorrichtung 50 zwei Informationsquellen für Tiefeninformationen, die zur Erstellung einer Tiefenkarte verwendet werden können. Einerseits die Steuerung der Multiaperturabbildungsvorrichtung in eine Abfolge von Fokuslagen, andererseits die Disparität zwischen optischen Kanälen zum Erfassen eines übereinstimmenden Bildinhalts.

Dies kann insofern Vorteile bieten, als jede Informationsquelle Vorteile mit Nachteilen kombiniert. So kann bspw. die disparitätsbasierte Tiefeninformation durch Okklusionen oder Verdeckungen stellenweise lückenhaft oder geringqualitativ sein, im Gegensatz zu der Abfolge von Fokuslagen jedoch schnell und mit einem geringen Aufwand an elektrische Energie für Aktuatorik und/oder Rechenleistung (welche sowohl entsprechende Rechenressourcen als auch elektrische Energie erfordert) erfolgen.

Ausführungsbeispiele sehen deshalb vor, die Tiefeninformation aus beiden Informationsquellen zu kombinieren. So kann etwa eine Vorab-Tiefenkarte aus der disparitätsbasierten Tiefeninformation erstellt werden und durch eine vollständig oder teilweise erstellte zusätzliche Tiefenkarte aus der Abfolge von Fokuslagen ergänzt oder verbessert werden. Vorab-Tiefenkarte beschreibt in diesem Zusammenhang nicht notwendigerweise einen zeitlichen Zusammenhang, da eine Reihenfolge, in welcher die beiden zu kombinierenden Tiefenkarten erstellt werden, beliebig sein kann. Gemäß weniger bevorzugten Ausführungsbeispielen kann die Vorab-Tiefenkarte aus der Abfolge von Fokuslagen erstellt und durch disparitätsbasierte Tiefeninformationen verbessert oder aufgewertet werden.

Die Steuereinrichtung 34 oder eine andere Instanz der Multiaperturabbildungsvorrichtung 50 kann ausgebildet sein, um eine Qualität oder Zuverlässigkeit der Tiefeninformation oder Tiefenkarte zu überprüfen, etwa indem eine Auflösung der Tiefeninformation überprüft wird und/oder ein Auftreten von Okklusionen oder anderer Effekte überwacht wird. Für betroffene Bereiche der Tiefenkarte kann zusätzlich Tiefeninformation aus der Abfolge von Fokuslagen erstellt werden, um die Vorab-Tiefenkarte zu verbessern oder zu korrigieren. So kann bspw. diese ergänzende Tiefeninformation energie- und/oder recheneffizient erhalten werden, indem lediglich für die zu ergänzenden Bereiche der Vorab-Tiefenkarte die Abfolge von Fokuslagen erstellt wird, d. h., lediglich in einem Teilbereich der Tiefenkarte. Durch die Verbesserung der Tiefenkarte und somit der Tiefeninformation können Stitching-Ergebnisse in hoher Qualität erhalten werden.

Ausführungsbeispiele sehen vor, dass die Steuereinrichtung einen örtlichen Bereich und/oder einen Bereich der Tiefenebenen zur Bestimmung der Tiefeninformation anhand der Abfolge von Fokuslagen, d. h., einen Wertebereich zwischen minimaler und maximaler Fokuslage anhand der zu ergänzenden oder korrigierenden Stellen in der Vorab-Tiefenkarte vorgibt, wobei auch mehrere Bereiche eingestellt werden können. D. h., zumindest einige der möglichen oder für die Erstellung der Tiefenkarte ausschließlich aus der Abfolge von Bildinformationen bzw. Fokuslagen eingestellten Fokuslagen können ausgelassen werden, was Rechenaufwand, Zeit und elektrische Energie sparen kann. Alternativ oder zusätzlich zu der Begrenzung der Anzahl und/oder Position der Fokuslagen kann die Steuereinrichtung ausgebildet sein, um die Tiefeninformationen lediglich für diejenigen Bereiche des Gesamtgesichtsfeldes 26 nachzuberechnen, in denen eine Verbesserung, Optimierung oder Korrektur der Vorab-Tiefenkarte erforderlich ist, was ebenfalls energie- und zeitsparend sein kann.

Die Steuereinrichtung kann ausgebildet sein, um Bereiche des Gesamtgesichtsfeldes in der Vorab-Tiefenkarte anhand eines Qualitätskriteriums auszuwählen, für die eine Verbesserung erforderlich ist, und die Vorab-Tiefenkarte in den ausgewählten Bereichen zu ergänzen und in nicht ausgewählten Bereichen nicht zu ergänzen. So können bspw. die zusätzlichen Tiefeninformationen zum Ergänzen der Vorab-Tiefenkarte lediglich für die ausgewählten Bereichen bestimmt werden und für nicht ausgewählte Bereiche nicht bestimmt werden. Bspw. kann die Steuereinrichtung ausgebildet sein, den zumindest einen Bereich und/oder die Fokuslagen, zu bestimmen, indem ein Vergleich ausgeführt wird, der angibt, ob die Qualität oder Zuverlässigkeit der Tiefenkarte in dem bestimmten Bereich zumindest einem Schwellwert entspricht. Dies kann dadurch erhalten werden, indem ein Referenzparameter daraufhin ausgewertet wird, ob zumindest eine Mindestqualität erreicht wird aber auch dadurch, dass überprüft wird, ob eine Überschreitung eines negativen Qualitätskriteriums (etwa Fehleranzahl oder dergleichen) unterbleibt, d. h., ein Schwellwert unterschritten oder zumindest nicht überschritten wird.

Die vorerwähnte Vorab-Tiefenkarte kann eine Tiefenkarte sein, die unter Verwendung der zur Verfügung stehenden Tiefeninformationen erstellt wird. Alternativ kann die Vorab-Tiefenkarte auf bereits als Ansammlung von Tiefeninformationen (ohne konkretes Kartenformat) verstanden werden.

In anderen Worten kann neben einer alleinigen Erzeugung der Tiefenkarte durch FokusStacks, die ohne redundante Gesichtsfeldaufnahme (zur Erzeugung der Parallaxe für Tiefenkarte) ausgeführt wird, für Systeme mit minimaler Kanalzahl (idealerweise nur zwei) angewendet werden. Dieses Konzept kann dahingehend abgewandelt werden, dass eine Unterstützung einer solchen Architektur (etwa 2x Gesichtsfeld oben, 2x Gesichtsfeld unten wie in Fig. 5d dargestellt, oder anders ausgeführt) durch eine anderweitig, als nur über Disparität erzeugte Tiefenkarte, zur Verbesserung selbiger, was schlussendlich auch zur Verbesserung der Stitching-Ergebnisse beitragen kann. Bevorzugt werden hier Ausführungsbeispiele gemäß dem Aspekt der Fokus-Stacks zur multimodalen Unterstützung unter Vermeidung anderweitiger Mechanismen, wie z.B. Tiefenkarte über Time of Flight (ToF) oder Coded Light herangezogen werden.

Ausführungsbeispiele beziehen sich auf den Aspekt der Kombination von Tiefenkarten aus Disparität und Fokus-Stacks. Ausführungsbeispiele gehen von der beschriebenen Architektur mit mehr als 2 Kanälen aus, die eine Tiefenkarte erstrangig aus der natürlicherweise vorliegenden Disparität/Parallaxe der Kanäle gewinnt. Je nach Rechenund/oder Power-Budget wird kann entweder stets eine weitere Tiefenkarte aus FokusStacks erzeugt und mit der ersten Tiefenkarte zu deren Verbesserung (im Wesentlichen Lochauffüllung bei Überdeckungen) und der Verbesserung der Stitching-Ergebnisse kombiniert, oder aber bevorzugt erst nach Feststellung offensichtlicher Mängel in der Tiefenkarte aus Disparität erzeugt werden. Eine andere Reihenfolge ist weniger bevorzugt, da die Erzeugung der Fokus-Stacks mit zusätzlichem Energieaufwand sowie möglicherweise erheblichen Zeitverlust bzw. daraus resultierend erheblich verkomplizierten Belichtungsverhältnissen der sequenziellen Einzelbilder verbunden sein kann. Vorteile, welche sich möglicherweise aus der zusätzlichen Verwendung einer Tiefenkarte, erzeugt aus FokusStacks extrem schnell hintereinander aufgenommenen Bildern ergeben, sind: Weniger Löcher in der Tiefenkarte durch Okklusionen, möglicherweise zusätzliche Tiefenebenen, insbesondere für größere Objektabstände, möglicherweise verbesserte laterale Auflösung der Tiefenkarte und insgesamt durch zusätzliche Informationsgewinnung, ein verbessertes Signal-Rausch-Verhältnis in der Tiefenkarte und damit weniger Uneindeutigkeiten bzw. gar Mehrdeutigkeiten, welche ansonsten zu Artefakten in den gestitchten Bildern des Gesamtgesichtsfeldes führen würden.

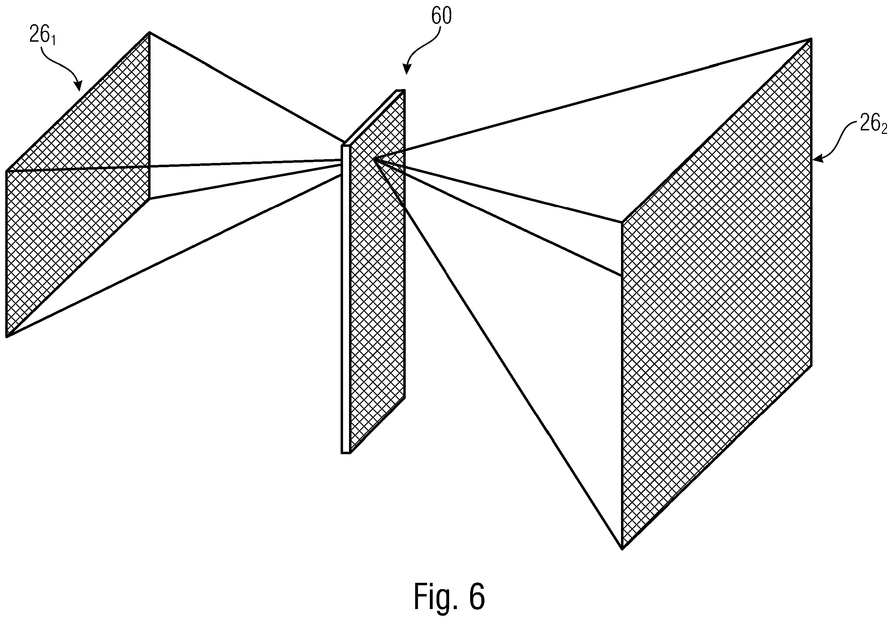

Fig. 6 zeigt eine schematische perspektivische Ansicht einer Vorrichtung 60 gemäß einem Ausführungsbeispiel im Hinblick auf den zweiten Aspekt. Die beschriebenen Ausführungen treffen ohne weiteres auch für die Vorrichtungen 10₁, 10₃, 30 und/oder 40 zu. Durch Steuern der Strahlumlenkeinrichtung in unterschiedliche Stellungen kann die Vorrichtung 60 bzw. die Multiaperturabbildungsvorrichtung der Vorrichtung 60 zwei voneinander beabstandete gesamte Gesichtsfelder 26₁ und 26₂ erfassen.

Die Vorrichtung 60 ist beispielsweise als portable oder mobile Vorrichtung gebildet, insbesondere ein Tablet-Computer oder ein Mobiltelefon, insbesondere ein Smartphone (intelligentes Telefon).

Eines der Gesichtsfelder 26₁ und 26₂ kann beispielsweise entlang einer Nutzerrichtung der Vorrichtung 60 angeordnet sein, wie es beispielsweise im Rahmen von Selbstaufnahmen (Selfie) für Fotos und/oder Videos üblich ist.

Das andere Gesamtgesichtsfeld kann beispielsweise entlang einer entgegengesetzten Richtung und/oder einer Weltrichtung der Vorrichtung 60 angeordnet sein und beispielsweise entlang der Richtung angeordnet sein, entlang der der Nutzer blickt, wenn er ausgehend vom Gesamtgesichtsfeld entlang der Nutzerrichtung auf die Vorrichtung 60 blickt.

Beispielsweise kann die Strahlumlenkeinrichtung 18 in Fig. 1b beidseitig reflektiv gebildet sein und beispielsweise in unterschiedlichen Stellungen mit unterschiedlichen Hauptseiten den Strahlengang der optischen Kanäle 16a-d umlenken, so dass ausgehend von der Vorrichtung 60 die Gesamtgesichtsfelder 26₁ und 26₂ gegenüberliegend voneinander und/oder in einem Winkel von 180° angeordnet sind.

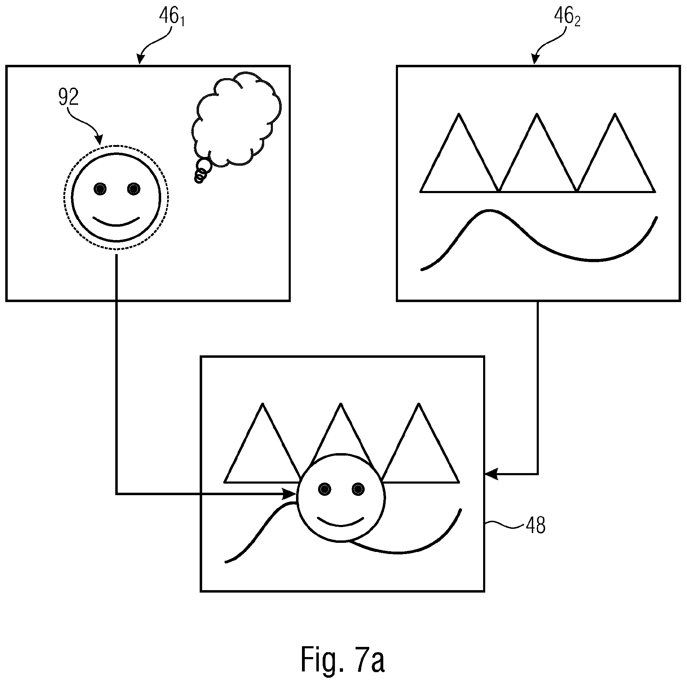

Fig. 7a zeigt ein schematisches Diagramm zur Verdeutlichung der Verarbeitung der Bildinformationen 46₁ und 46₂, die durch Abbildung der Gesamtgesichtsfelder 26₁ und 26₂ erhalten werden können. Die Steuereinrichtung ist ausgebildet, um einen Teil 92 der Abbildungsinformation 46₁ des Gesichtsfelds 26₁ zu separieren, beispielsweise auszuschneiden, zu isolieren oder ausschließlich den Teil 92 zu kopieren. Die Steuereinrichtung ist ferner ausgebildet, um den separierten oder segmentierten Teil 92 mit der Abbildungsinformation 46₂ zu kombinieren, d. h., den Teil 92 in die Abbildungsinformation 46₂ einzufügen, um die akkumulierte Bildinformation 48 zu erhalten. Diese weist stellenweise das Gesamtgesichtsfeld 26₂ und stellenweise, nämlich dort, wo der Teil 92 eingefügt wurde, die Bildinformation 46₁ auf. Es wird darauf hingewiesen, dass der Erhalt der akkumulierten Bildinformation 48 nicht auf die Einfügung eines einzigen Teils 92 beschränkt ist, sondern dass eine beliebige Anzahl von Teilen 92 aus der Bildinformation 46₁ segmentiert werden kann und einer, mehrere oder alle diese Teile in die Bildinformation 46₂ eingefügt werden können.

Ein Ort oder eine Position, an der der Teil 92 in die zweite Abbildungsinformation 46₂ eingefügt wird, kann automatisch von der Steuereinrichtung bestimmt werden, etwa durch Projektion des Teils 92 durch die Vorrichtung 60 hindurch in das zweite Gesichtsfeld 26₂, kann aber alternativ oder zusätzlich auch von einem Benutzer gewählt werden.

Gemäß einem Ausführungsbeispiel ist die Steuereinrichtung ausgebildet, um eine Person in der ersten Abbildungsinformation 46₁ zu identifizieren und zu segmentieren, beispielsweise über einen Mustervergleich und/oder eine Kantendetektion, insbesondere aber auf Basis der durch die Vorrichtung selbst erzeugte Tiefenkarte. Die Steuereinrichtung kann ausgebildet sein, um das Abbild der Person in die zweite Abbildungsinformation 46₂ einzufügen, um die akkumulierte Bildinformation 48 zu erhalten. Das bedeutet, der Teil 92 kann eine Person sein, etwa ein Nutzer der Vorrichtung 60. Ausführungsbeispiele sehen vor, dass die Vorrichtung ausgebildet ist, um die Person automatisch zu identifizieren, und um das Abbild der Person, das bedeutet, den Teil 92, automatisch in die zweite Abbildungsinformation 46₂ einzufügen. Dies ermöglicht es, automatisch, ein Selbstportrait oder eine Selbstaufnahme vor den oder in den zweiten Gesamtgesichtsfeld 26₂ anzufertigen, ohne die Vorrichtung 60 aufwendig positionieren zu müssen und/oder ohne den Nutzer aufwendig positionieren zu müssen.

Ausführungsbeispiele sehen vor, dass die Steuereinrichtung eine Tiefenkarte, etwa die Tiefenkarte 38, verwendet, um den Teil 92 in der zweiten Abbildungsinformation 46₂ zu positionieren. Die Tiefenkarte 38 kann eine Mehrzahl oder Vielzahl von Tiefenebenen aufweisen, beispielsweise, gemäß der Anzahl der berücksichtigten Fokuslagen oder einer hieraus erhaltenen reduzierten Anzahl oder einer hieraus interpolierten höheren Anzahl. Die Steuereinrichtung kann ausgebildet sein, um den Teil 92 in der vorbestimmten Tiefenebene der zweiten Abbildungsinformation 46₂ einzufügen, um die akkumulierte Bildinformation 48 zu erhalten. Die vorbestimmte Tiefenebene kann im Wesentlichen, d. h., innerhalb eines Toleranzbereichs von ± 10%, ± 5% oder ± 2% einen Abstand des ersten Gesamtgesichtsfelds 26₂ von der Vorrichtung 60 entsprechen bzw. dem Abstand des segmentierten Teils 92 von der Vorrichtung 60. Dies kann auch als tiefenrichtiges Einfügen des Teils 92 in die zweite Abbildungsinformation 46₂ bezeichnet werden.

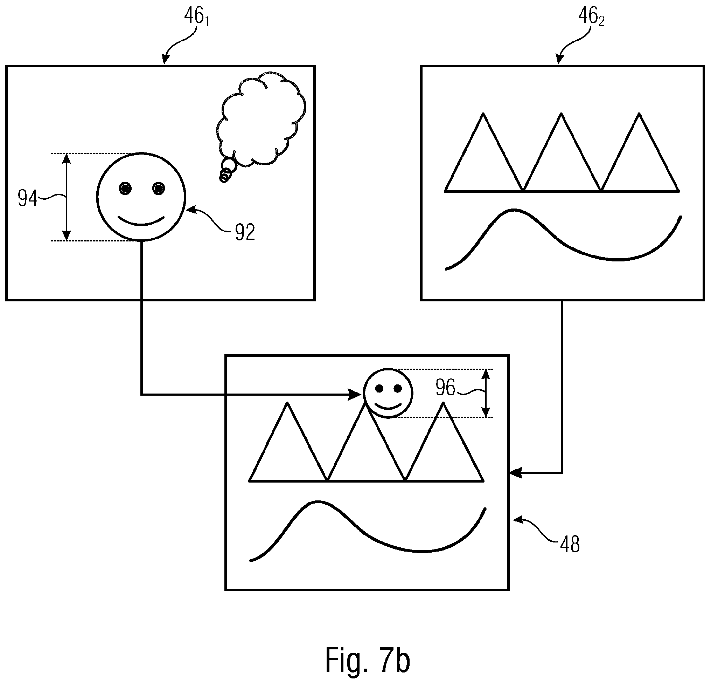

Fig. 7b zeigt eine schematische Darstellung einer Skalierung des Teils 92 in der akkumulierten Bildinformation 48. Alternativ kann auch eine andere Tiefenebene gewählt werden, wobei hierfür verschiedene Möglichkeiten von Ausführungsbeispielen vorgesehen sind. Beispielsweise kann die vorbestimmte Tiefenebene von der Platzierung des Teils 92 in der zweiten Abbildungsinformation 46₂ beeinflusst sein oder von dieser bestimmt sein. Die Platzierung kann automatisch oder auch durch eine Benutzereingabe erfolgen. Wählt der Benutzer beispielsweise einen bestimmten Ort oder Platz innerhalb der zweiten Abbildungsinformation 46₂ zur Einfügung des Teils 92, so kann die Steuereinrichtung ausgebildet sein, um in der zweiten Abbildungsinformation 46₂ einen Abstand des Bereichs, in welchem der Teil 92 eingefügt werden soll, zu bestimmen. In Kenntnis des Abstands des Teils 92 zur Vorrichtung und der Objekte in der zweiten Abbildungsinformation 46₂, beispielsweise unter Verwendung von Tiefenkarten, kann eine durch die Benutzereingabe bewirkte virtuelle Abstandsänderung des Teils 92 durch eine Skalierung des Teils 92 ausgeglichen werden.

So kann eine eindimensionale, zweidimensionale oder dreidimensionale Größe 94 des Teils 92 in eine Größe 96 verändert werden, etwa verkleinert, wenn der Abstand des Teils 92 von der ersten Abbildungsinformation 46₁ zur zweiten Abbildungsinformation 46₂ vergrößert ist, oder vergrößert, wenn der Abstand von der ersten Abbildungsinformation 46₁ zur zweiten Abbildungsinformation 46₂ verkleinert ist. Unabhängig davon, aber auch kombinatorisch mit einer Platzierung des Teils 92 in der ersten Abbildungsinformation 46₁ basierend auf einer assoziierten Benutzereingabe kann die Vorrichtung konfiguriert sein, um die Abbildungsinformation 46₁ zu skalieren, um eine skalierte Abbildungsinformation zu erhalten. Die skalierte Abbildungsinformation kann durch die Steuereinrichtung in die Abbildungsinformation 46₂ eingefügt werden, um die akkumulierte Bildinformation 48 zu erhalten. Die Vorrichtung kann konfiguriert sein, um einen Abstand eines Objekts, das den Teil 92 repräsentiert und das in der ersten Abbildungsinformation 46₁ abgebildet ist, bezüglich der Vorrichtung 60 zu bestimmen. Die Vorrichtung kann die Abbildungsinformation 46₁ bzw. den Teil 92 hiervon basierend auf einem Vergleich des bestimmten Abstands mit der vorbestimmten Tiefenebene in der zweiten Abbildungsinformation 46₂ skalieren. Es ist vorteilhaft, wenn die beiden Abbildungsinformationen 46₁ und 46₂ in kurzen zeitlichen Abständen erfasst werden. Vorteilhaft ist, wenn dieser zeitliche Abstand innerhalb eines Zeitintervalls von höchstens 30 ms, höchstens 10 ms, höchstens 5 ms oder höchstens 1 ms, etwa 0,1 ms beträgt. Diese Zeit kann bspw. für eine Umschaltung oder Umpositionierung der Strahlumlenkeinrichtung genutzt werden und zumindest teilweise von einer Dauer dieses Vorganges bestimmt sein.

Die akkumulierte Bildinformation 48 kann als Einzelbild, alternativ oder zusätzlich aber auch als Videodatenstrom, etwa als eine Vielzahl von einzelnen Bildern, erhalten werden.

Gemäß einer Ausführungsform ist eine Vorrichtung in Übereinstimmung mit dem zweiten Aspekt so gebildet, dass die erste Abbildungsinformation 46₁ eine Abbildung eines Nutzers umfasst und die zweite Abbildungsinformation 46₂ eine Weltansicht der Vorrichtung umfasst. Die Steuereinrichtung ist ausgebildet, um ein Abbild des Nutzers aus der ersten Abbildungsinformation 46₁ zu segmentieren und in die Weltansicht einzufügen. Beispielsweise kann die Vorrichtung abgebildet sein, um das Abbild des Nutzers tiefenrichtig in die Weltansicht einzufügen.

In anderen Worten kann im Zusammenhang mit dem zweiten Aspekt die Aufnahme eines Selfie-Bilds oder Selfie-Videos eine tiefenbasierte Kombination quasi-gleichzeitiger Bildaufnahmen mit vorderseitiger Kameraaufnahme (Front-Facing Camera/View) und rückseitiger Kameraaufnahme (Main Camera/View) einer Vorrichtung, insbesondere eines Mobiltelefons umfassen. Dabei kann der Vordergrund der Selfie-Aufnahme, das bedeutet, das Selbstportrait, in den Vordergrund der Aufnahme der Hauptkamera übertragen werden. Eine sehr schnelle Umschaltung zwischen vorderseitiger und rückseitiger Aufnahme durch eine Veränderung der Stellung der Strahlumlenkeinrichtung ermöglicht die genannte quasi-gleichzeitige Aufnahme des Welt-seitigen und des User-seitigen Kamerabilds mit dem gleichen Bildsensor. Obwohl gemäß dem zweiten Aspekt auch eine einkanalige Abbildungsvorrichtung verwendet werden kann, liefert der zweite Aspekt insbesondere im Hinblick auf Multiaperturabbildungsvorrichtungen Vorteile, da diese bereits eine Tiefenkarte erstellen oder verwenden können, um die Einzelbilder zusammenzufügen. Diese Tiefenkarte kann auch zur Bestimmung von Tiefeninformationen für die Synthetisierung der akkumulierten Abbildungsinformation 48 verwendet werden. Es wird ein Ablauf ermöglicht, der wie folgt beschrieben werde kann:
1. Nutze Tiefenkarte der Selfie-Aufnahme, um Vordergrund, d. h., die sich selbst fotografierende(n) Person(en) vom Hintergrund zu segmentieren;
2. Nutze die Tiefenkarte der Welt-seitigen Aufnahme, um einen Vordergrund und einen Hintergrund hieraus festzustellen, das bedeutet, Tiefeninformation zu separieren; und
3. Füge den Vordergrund, d. h., die sich selbst fotografierende(n) Person(en) aus der Selfie-Aufnahme in das Bild der Welt-seitigen Aufnahme, insbesondere deren Vordergrund ein.

Vorteilhaft daran ist, dass die Selfie-Aufnahme mit dem Welt-seitig aufgenommenen Bild als Hintergrund kombiniert werden kann, ohne das Telefon dafür, wie ansonsten notwendig, um 180° drehen zu müssen, um sich dabei vor dieser Szene selbst mit aufzunehmen. Alternativ oder zusätzlich wird vermieden, dass rückwärts an sich vorbei fotografiert wird, was es erfordert, dass bezüglich der Ausrichtung des Telefons gegenüber der Szene immer spiegelverkehrt gedacht werden muss. Auch gemäß dem zweiten Aspekt kann die Tiefenkarte selbst erzeugt werden, wie es im Zusammenhang mit dem ersten Aspekt beschrieben ist, so dass auf die zusätzliche Anordnung von Time of Flight-Sensoren oder Structured Light-Sensoren verzichtet werden kann.

Nachfolgend wird nun noch Bezug genommen auf einige vorteilhafte Ausgestaltungen der Multiaperturabbildungsvorrichtung zur Erläuterung erfindungsgemäßer Vorteile.

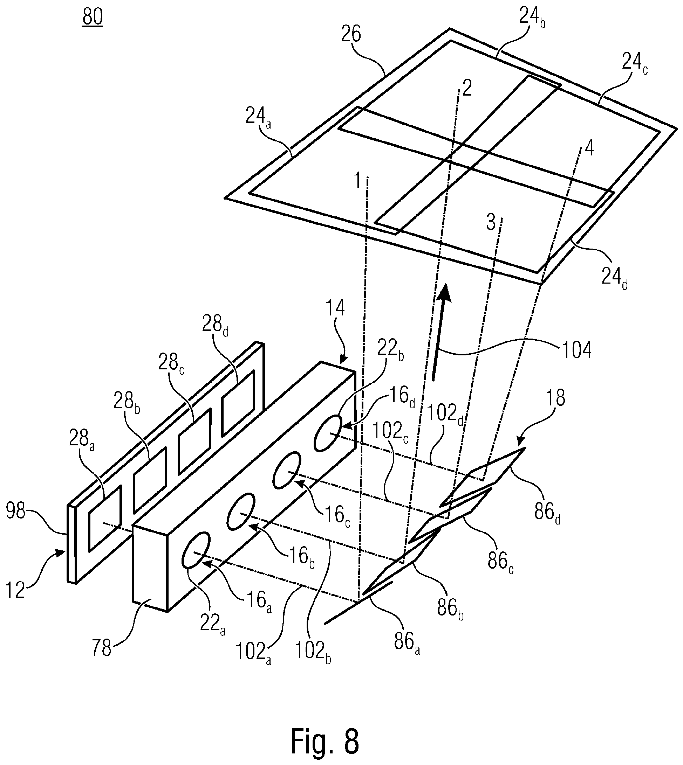

Fig. 8 zeigt Teile einer Multiaperturabbildungsvorrichtung 80, die in erfindungsgemäßen Vorrichtungen des ersten und/oder zweiten Aspekts eingesetzt werden kann, wobei eine mögliche Fokussiereinrichtung und/oder Aktorik zur Implementierung einer optischen Bildstabilisierung nicht dargestellt sind, jedoch ohne weiteres implementiert werden können.

Die Multiaperturabbildungsvorrichtung 80 von Fig. 8 umfasst ein in mehreren Zeilen gebildetes oder bevorzugt einzeiliges Array 14 von nebeneinander angeordneten optischen Kanälen 16a-d. Jeder optische Kanal 16a-d umfasst eine Optik 22a-d zur Abbildung eines jeweiligen Teilgesichtsfeldes 24a-d eines Gesamtgesichtsfeldes 26, ggf. auch eines Gesamtgesichtsfeldes, wie in Zusammenhang mit Fig. 5 beschrieben ist. Das abgebildete Gesichtsfeld der Multiaperturabbildungsvorrichtung 80 wird auf einen jeweils zugeordneten Bildsensorbereich 28a-d eines Bildsensors 12 abgebildet.

Die Bildsensorbereiche 28a-d können beispielsweise jeweils aus einem Chip gebildet sein, der ein entsprechendes Pixelarray umfasst, wobei die Chips wie in den Fig. 8 angedeutet, auf einem gemeinsamen Substrat bzw. einer gemeinsamen Platine 98 montiert sein können. Alternativ wäre es natürlich auch möglich, dass die Bildsensorbereiche 28a-d jeweils aus einem Teil eines gemeinsamen Pixelarrays, das sich kontinuierlich oder mit Unterbrechungen über die Bildsensorbereiche 28a-d erstreckt, gebildet sind, wobei das gemeinsame Pixelarray beispielsweise auf einem einzelnen Chip gebildet ist. Beispielsweise werden dann lediglich die Pixelwerte des gemeinsamen Pixelarrays in den Bildsensorbereichen 28a-d ausgelesen. Verschiedene Mischungen dieser Alternativen sind natürlich ebenfalls möglich, wie z. B. das Vorhandensein eines Chips für zwei oder mehr Kanäle und eines weiteren Chips für wiederum andere Kanäle oder dergleichen. In dem Fall mehrerer Chips des Bildsensors 12 können diese beispielsweise auf einer oder mehreren Platinen montiert sein, wie z.B. alle gemeinsam oder gruppenweise oder dergleichen.

Bei dem Ausführungsbeispiel von Fig. 8 sind vier optischen Kanäle 16a-d einzeilig nebeneinander in Zeilenerstreckungsrichtung des Arrays 14 angeordnet, aber die Zahl vier ist lediglich exemplarisch und könnte auch jede andere Zahl größer Eins annehmen, d. h., es können N optische Kanäle mit N>1 angeordnet sein. Darüber hinaus kann das Array 14 auch weitere Zeilen aufweisen, die sich entlang der Zeilenerstreckungsrichtung erstrecken. Als Array 14 von optischen Kanälen 16a-d wird ein Verbund der optischen Kanäle bzw. eine räumliche Gruppierung hiervon verstanden. Die Optiken 22a-d können jeweils eine Linse aber auch einen Linsenverbund oder Linsenstapel sowie eine Kombination einer abbildenden Optik mit weiteren optischen Elementen aufweisen, darunter Filter, Blenden, reflektive oder diffraktive Elemente oder dergleichen. Das Array 14 kann so ausgestaltet sein, dass die Optiken 22a-d kanalindividuell, in Gruppen oder kanalglobal, d. h., alle Kanäle gemeinsam, an dem Substrat 78 angeordnet, befestigt oder montiert sind. Das bedeutet, es kann ein einzelnes Substrat 78, mehrere Teile hiervon oder auch kein Substrat 78 angeordnet sein, etwa wenn die Optiken 22a-d an anderer Stelle gehaltert werden.

Optische Achsen bzw. die Strahlengänge 102a-d der optischen Kanäle 16a-d können gemäß einem Beispiel zwischen den Bildsensorbereichen 28a-d und den Optiken 22a-d parallel zueinander verlaufen. Dazu sind die Bildsensorbereiche 28a-d beispielsweise in einer gemeinsamen Ebene angeordnet und ebenso die optischen Zentren der Optiken 22a-d. Beide Ebenen sind parallel zueinander, d.h. parallel zu der gemeinsamen Ebene der Bildsensorbereiche 28a-d. Zudem fallen bei einer Projektion senkrecht auf die Ebene der Bildsensorbereiche 28a-d optische Zentren der Optiken 22a-d mit Zentren der Bildsensorbereiche 28a-d zusammen. In anderen Worten ausgedrückt sind in diesen parallelen Ebenen die Optiken 22a-d einerseits und die Bildsensorbereiche 28a-d mit gleichem Wiederholabstand in Zeilenerstreckungsrichtung angeordnet.

Ein bildseitiger Abstand zwischen Bildsensorbereichen 28a-d und den zugehörigen Optiken 22a-d ist so eingestellt, dass die Abbildungen auf die Bildsensorbereiche 28a-d auf einen gewünschten Objektabstand eingestellt sind. Der Abstand liegt beispielsweise in einem Bereich gleich oder größer der Brennweite der Optiken 22a-d oder zum Beispiel in einem Bereich zwischen einem Einfachen und einem Zweifachen der Brennweite der Optiken 22a-d, beides inklusive. Der bildseitige Abstand entlang der optischen Achse 102a-d zwischen Bildsensorbereich 28a-d und Optik 22a-d kann auch einstellbar sein, wie z.B. manuell durch einen Benutzer und/oder automatisch über eine Fokussiereinrichtung bzw. eine Autofokussteuerung.

Ohne zusätzliche Maßnahmen überlappten sich die Teilgesichtsfelder 24a-d der optischen Kanäle 16a-d im Wesentlichen vollständig aufgrund der Parallelität der Strahlengänge bzw. optischen Achsen 102a-d. Zur Abdeckung eines größeren Gesamtgesichtsfeldes 26 und damit sich die Teilgesichtsfelder 24a-d lediglich räumlich teilweise überlappen, ist die Strahlumlenkeinrichtung 18 vorgesehen. Die Strahlumlenkeinrichtung 18 lenkt die Strahlengänge 102a-d bzw. optischen Achsen bspw. mit einer kanalindividuellen Abweichung in eine Gesamtgesichtsfeldrichtung 104 um. Die Gesamtgesichtsfeldrichtung 104 verläuft beispielsweise parallel zu einer Ebene, die senkrecht zur Zeilenerstreckungsrichtung des Arrays 14 und parallel zu dem Verlauf der optischen Achsen 102a-d vor bzw. ohne Strahlumlenkung ist. Beispielsweise geht die Gesamtgesichtsfeldrichtung 104 aus den optischen Achsen 102a-d durch Drehung um die Zeilenerstreckungsrichtung um einen Winkel hervor, der > 0° und < 180° ist und beispielsweise zwischen 80 und 100° liegt und beispielsweise 90° betragen kann. Das Gesamtgesichtsfeld 26 der Multiaperturabbildungsvorrichtung 80, das der Gesamtabdeckung der Teilgesichtsfelder 24a-d entspricht, liegt also nicht in Richtung einer Verlängerung der Hintereinanderschaltung des Bildsensors 12 und des Arrays 14 in Richtung der optischen Achsen 102a-d, sondern durch die Strahlumlenkung befindet sich das Gesamtgesichtsfeld seitlich zu Bildsensor 12 und Array 14 in einer Richtung, in der die Bauhöhe der Multiaperturabbildungsvorrichtung 80 gemessen wird, d.h. die laterale Richtung senkrecht zur Zeilenerstreckungsrichtung.

Zusätzlich aber lenkt die Strahlumlenkeinrichtung 18 bspw. jeden Strahlengang bzw. den Strahlengang jedes optischen Kanals 16a-d mit einer kanalindividuellen Abweichung von der soeben erwähnten zu der Richtung 104 führenden Umlenkung ab. Dazu umfasst die Strahlumlenkeinrichtung 18 für jeden Kanal 16a-d bspw. ein individuell eingerichtetes Element, etwa eine reflektierende Facette 86-d und/oder eine reflektierende Fläche. Diese sind gegenseitig leicht geneigt. Die gegenseitige Verkippung der Facetten 86a-d ist derart gewählt, dass bei Strahlumlenkung durch die Strahlumlenkeinrichtung 18 die Teilgesichtsfelder 24a-d mit einer leichten Divergenz versehen werden, derart, dass sich die Teilgesichtsfelder 24a-d lediglich teilweise überlappen. Dabei kann, wie es exemplarisch in Fig. 8 angedeutet ist, die individuelle Umlenkung auch derart gestaltet sein, dass die Teilgesichtsfelder 24a-d das Gesamtgesichtsfeld 26 zweidimensional abdecken, d.h. im Gesamtgesichtsfeld 26 zweidimensional verteilt angeordnet sind.

Gemäß einem weiteren Beispiel kann die Optik 22a-d eines optischen Kanals eingerichtet sein, um die Divergenz in den Strahlengängen 102a-d ganz oder teilweise zu erzeugen, was es ermöglicht auf die Neigung zwischen einzelnen Facetten 86a-d ganz oder teilweise zu verzichten. Wird die Divergenz bspw. vollständig durch die Optiken 22a-d bereitgestellt, so kann die Strahlumlenkeinrichtung auch als ebener Spiegel gebildet sein.

Es sei darauf hingewiesen, dass viele der bisher beschriebenen Details zur Multiaperturabbildungsvorrichtung 80 lediglich exemplarisch gewählt wurden. Das betraf beispielsweise schon die zuvor erwähnte Anzahl von optischen Kanälen. Die Strahlumlenkeinrichtung 18 kann ebenfalls anders gebildet sein als dies bisher beschrieben wurde. Beispielsweise wirkt die Strahlumlenkeinrichtung 18 nicht notwendigerweise reflektiv. Sie kann also auch anders ausgeführt sein als in Form eines Facettenspiegels, wie z.B. in Form transparenter Prismenkeile. In diesem Fall könnte beispielsweise die mittlere Strahlumlenkung 0° betragen, d.h. die Richtung 104 könnte beispielsweise parallel zu den Strahlengängen 102a-d noch vor oder ohne Strahlumlenkung sein bzw. in anderen Worten ausgedrückt könnte die Multiaperturabbildungsvorrichtung 80 trotzt Strahlumlenkeinrichtung 18 weiterhin "geradeaus schauen". Das kanalindividuelle Umlenken durch die Strahlumlenkeinrichtung 18 würden wieder dazu führen, dass sich die Teilgesichtsfelder 24a-d lediglich geringfügig gegenseitig überlappen, wie z.B. paarweise mit einem Überlapp < 10 % bezogen auf die Raumwinkelbereiche der Teilgesichtsfelder 24a-d.

Auch könnten die Strahlengänge 102a-d bzw. optischen Achsen von der beschrieben Parallelität abweichen und dennoch könnte die Parallelität der Strahlengänge der optischen Kanäle aber immer noch so ausgeprägt sein, dass sich die Teilgesichtsfelder, die durch die einzelnen Kanäle 16a-N abgedeckt bzw. auf die jeweiligen Bildsensorbereiche 28a-d abgebildet werden, ohne weitere Maßnahmen, wie nämlich die Strahlumlenkung, größtenteils überlappen würden, so dass, um ein größeres Gesamtgesichtsfeld durch die Multiaperturabbildungsvorrichtung 80 abzudecken, die Strahlumlenkeinrichtung 18 die Strahlengänge so mit einer zusätzlichen Divergenz versieht, dass sich die Teilgesichtsfelder von N optischen Kanälen 16a-N weniger gegenseitig überlappen. Die Strahlumlenkeinrichtung 18 sorgt beispielsweise dafür, dass das Gesamtgesichtsfeld einen Öffnungswinkel aufweist, der größer ist als 1,5-mal dem Öffnungswinkel der einzelnen Teilgesichtsfelder der optischen Kanäle 16a-N. Mit einer Art Vorab-Divergenz der Strahlengänge 102a-d wäre es auch möglich, dass sich beispielsweise nicht alle Facettenneigungen unterscheiden, sondern dass manche Gruppen von Kanälen beispielsweise die Facetten mit gleicher Neigung besitzen. Letztere können dann einstückig bzw. kontinuierlich ineinander übergehend gebildet werden, quasi als eine Facette, die dieser Gruppe von in Zeilenerstreckungsrichtung benachbarten Kanälen zugeordnet ist.

Die Divergenz der optischen Achsen 102a-d dieser Kanäle 16a-d könnte dann von der Divergenz dieser optischen Achsen 102a-d stammen, wie sie durch lateralen Versatz zwischen optischen Zentren der Optiken 22a-d und Bildsensorbereichen 28a-d der Kanäle 16a-d oder Prismenstrukturen oder dezentrierten Linsenausschnitten erzielt wird. Die Vorab-Divergenz könnte sich beispielsweise auf eine Ebene beschränken. Die optischen Achsen 102a-d könnten beispielsweise vor bzw. ohne Strahlumlenkung 18 in einer gemeinsamen Ebene verlaufen, aber in dieser divergent, und die Facetten 86a-d bewirken lediglich nur noch eine zusätzliche Divergenz in der anderen Transversalebene, d.h. sie sind alle parallel zur Zeilenerstreckungsrichtung und gegeneinander nur noch unterschiedlich zur vorerwähnten gemeinsamen Ebene der optischen Achsen 102a-d geneigt, wobei hier wiederum mehrere Facetten 86a-d gleichen Neigung besitzen können bzw. einer Gruppe von Kanälen gemeinsam zugeordnet sein könnten, deren optischen Achsen sich beispielsweise bereits in der vorerwähnten gemeinsamen Ebene der optischen Achsen paarweise vor bzw. ohne Strahlumlenkung unterscheiden.

Unter Weglassung der Strahlumlenkeinrichtung 18 oder Ausbildung der Strahlumlenkeinrichtung 18 als planer Spiegel oder dergleichen könnte auch die gesamte Divergenz durch den lateralen Versatz zwischen optischen Zentren der Optiken 22a-d einerseits und Zentren der Bildsensorbereiche 28a-d andererseits oder durch Prismenstrukturen oder dezentrierte Linsenausschnitte bewerkstelligt werden.

Die erwähnte möglicher Weise vorliegende Vorab-Divergenz kann beispielsweise erzielt werden, indem die optischen Zentren der Optiken 22a-d auf einer Geraden entlang der Zeilenerstreckungsrichtung liegen, während die Zentren der Bildsensorbereiche 28a-d von der Projektion der optischen Zentren entlang der Normalen der Ebene der Bildsensorbereiche 28a-d auf Punkte auf einer Geraden in der Bildsensorebene abweichend angeordnet sind, wie z.B. an Punkten, die von den Punkten auf vorerwähnter Gerade in der Bildsensorebene kanalindividuell entlang der Zeilenerstreckungsrichtung und/oder entlang der Richtung senkrecht zur sowohl der Zeilenerstreckungsrichtung als auch der Bildsensornormalen abweichen. Alternativ kann Vorab-Divergenz erzielt werden, indem die Zentren der Bildsensoren 28a-d auf einer Geraden entlang der Zeilenerstreckungsrichtung liegen, während die Zentren der Optiken 22a-d von der Projektion der optischen Zentren der Bildsensoren entlang der Normalen der Ebene der optischen Zentren der Optiken 22a-d auf Punkte auf einer Geraden in der Optikzentrenebene abweichend angeordnet sind, wie z.B. an Punkten, die von den Punkten auf vorerwähnter Gerade in der Optikzentrenebene kanalindividuell entlang der Zeilenerstreckungsrichtung und/oder entlang der Richtung senkrecht zur sowohl der Zeilenerstreckungsrichtung als auch der Normalen der Optikzentrenebene abweichen.

Es wird bevorzugt, wenn vorerwähnte kanalindividuelle Abweichung von der jeweiligen Projektion lediglich in Zeilenerstreckungsrichtung verläuft, also die optischen Achsen 102a-d sich lediglich in einer gemeinsamen Ebene befinden mit einer Vorabdivergenz versehen werden. Sowohl optische Zentren als auch Bildsensorbereichszentren liegen dann jeweils auf einer Geraden parallel zur Zeilenerstreckungsrichtung, aber mit unterschiedlichen Zwischenabständen. Ein lateraler Versatz zwischen Linsen und Bildsensoren in senkrechter lateraler Richtung zur Zeilenerstreckungsrichtung führte demgegenüber zu einer Vergrößerung der Bauhöhe. Ein rein In-Ebene-Versatz in Zeilenerstreckungsrichtung ändert die Bauhöhe nicht, aber es resultieren ggf. weniger Facetten und/oder die Facetten weisen nur eine Kippung in einer Winkelorientierung auf, was den Aufbau vereinfacht.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Vorrichtung mit:
einer Multiaperturabbildungsvorrichtung mit:
einem Bildsensor (12);
einem Array (14) von nebeneinander angeordneten optischen Kanälen (16a-d), wobei jeder optische Kanal (16a-d) eine Optik (22a-d) zur Abbildung zumindest eines Teilgesichtsfeldes (24a-d) eines Gesamtgesichtsfeldes (26₁, 26₂) auf einen Bildsensorbereich (28a-d) des Bildsensors (12) umfasst,
einer Strahlumlenkeinrichtung (18) zum Umlenken eines Strahlengangs (104) der optischen Kanäle (16a-d),
einer Fokussiereinrichtung (32) zum Einstellen einer Fokuslage der Multiaperturabbildungsvorrichtung;
wobei die Vorrichtung ferner aufweist:
eine Steuereinrichtung (34; 54), die ausgebildet ist, um die Fokussiereinrichtung (32) zu steuern und um Bildinformationen (36) von dem Bildsensor (12) zu empfangen;
wobei die Steuereinrichtung (34; 54) konfiguriert ist, um die Multiaperturabbildungsvorrichtung in eine Abfolge von Fokuslagen (56) zu steuern, um eine korrespondierende Abfolge von Bildinformationen (36) des Gesamtgesichtsfeldes (26₁, 26₂) zu erfassen, und um basierend auf der Abfolge von Bildinformationen (36) eine Tiefenkarte (38) für das erfasste Gesamtgesichtsfeld zu erstellen;
wobei die Steuereinrichtung (34; 54) ausgebildet ist, um
in der Abfolge von Fokuslagen (56) eine korrespondierende Anzahl von Gruppen von Teilbildern (64) zu erfassen, wobei jedes Teilbild (64) einem abgebildeten Teilgesichtsfeld (24a-d) zugeordnet ist; um
aus einem Vergleich von lokalen Bildschärfeinformationen in den Teilbildern (64) die Tiefenkarte (38) zu erstellen; und um
unter Verwendung der Tiefenkarte (38) die Teilbilder (64) einer Gruppe von Teilbildern zu einem Gesamtbild (42) zusammenzusetzen;
um Bereiche des Gesamtgesichtsfeldes in einer Vorab-Tiefenkarte anhand eines Qualitätskriteriums auszuwählen, für die eine Verbesserung erforderlich ist, und um zusätzliche Tiefeninformationen zum Ergänzen der Vorab-Tiefenkarte für die ausgewählten Bereichen zu bestimmen und für nicht ausgewählte Bereiche nicht zu bestimmen.

2. Vorrichtung gemäß Anspruch 1, wobei das Qualitätskriterium angibt, ob zumindest eine Mindestqualität erreicht wird oder ob eine Überschreitung eines negativen Qualitätskriteriums unterbleibt.

3. Vorrichtung gemäß Anspruch 1 oder 2, wobei jedes Teilbild einem abgebildeten Teilgesichtsfeld zugeordnet ist, und jede der Gruppen von Teilbildern eine gemeinsame Fokuslage aufweist, wobei die Steuereinrichtung (34; 54) ausgebildet ist, um den Vergleich von lokalen Bildschärfeinformationen in den Teilbildern auszuführen und um hieraus die Tiefenkarten zu erstellen.

4. Vorrichtung gemäß einem der vorangehenden Ansprüche, wobei die Steuerungseinrichtung ausgebildet ist, um in Kenntnis der Fokuslage, die für die Erfassung der Gruppe von Teilbildern eingestellt wurde, und unter Bestimmung scharf abgebildeter Objekte, die sich in der jeweils eingestellten Fokuslage befinden, eine Information darüber zu erhalten, dass die jeweils scharf abgebildeten Bildbereiche in einem Abstand zur Multiaperturabbildungsvorrichtung befindlich aufgenommen wurden, die mit der eingestellten Fokuslage korrespondiert.

5. Vorrichtung gemäß einem der vorangehenden Ansprüche, wobei die Steuerungseinrichtung ausgebildet ist, um durch Verwendung mehrerer Gruppen von Teilbildern und mehrerer Fokuslagen eine Information darüber zu erhalten, dass die jeweils scharf abgebildeten Bildbereiche in einem Abstand zur Multiaperturabbildungsvorrichtung befindlich aufgenommen wurde, für unterschiedliche Objekte zu erhalten und für das Gesamtgesichtsfeld erzeugen, um so zur Tiefenkarte zu gelangen.

6. Vorrichtung gemäß einem der vorangehenden Ansprüche, wobei die Steuerungseinrichtung ausgebildet ist, um basierend auf der Kenntnis, welche der Fokuslagen zum Erhalt des Teilbilds eingestellt wurde, durch Analyse der Bildinformation dahin gehend, welche der Bildteile scharf abgebildet sind, zu bestimmen, in welchem Abstand diese scharf abgebildeten Objekte bezüglich der Vorrichtung angeordnet sind, und um diese Information bezüglich des Abstands für die Tiefenkarte zu verwenden.

7. Vorrichtung gemäß einem der vorangehenden Ansprüche, wobei die Steuerungseinrichtung ausgebildet ist, die Schärfe der gleichen Objekte in benachbarten Bildern des Stacks, die Zuordnung der Fokus-Aktuatorposition zum Objektabstand via einer kalib- rierten Lookup-Table und/oder die Richtung des Through-Focus-Scans zu verwenden, um teils rekursiv aus benachbarten Bildern des Stacks die Tiefeninformation zu gewinnen und Doppeldeutigkeiten zu vermeiden.

8. Vorrichtung gemäß einem der vorangehenden Ansprüche, bei der die Steuereinrichtung ausgebildet ist, um die Tiefenkarte (38) aus der Abfolge von Bildinformationen (36) zu erstellen.

9. Vorrichtung gemäß einem der vorangehenden Ansprüche, bei der die optischen Kanäle ausgebildet sind, um das Gesamtgesichtsfeld zumindest stereoskop zu erfassen;
wobei die Steuereinrichtung ausgebildet ist, um eine Vorab-Tiefenkarte basierend auf aus den optischen Kanälen erhaltenen Disparitätsinformationen zu erstellen; und um die Vorab-Tiefenkarte basierend auf Tiefeninformationen, die auf der Abfolge von Bildinformationen basieren, zu ergänzen, um die Tiefenkarte (38) zu erhalten; oder
wobei die Steuereinrichtung ausgebildet ist, um eine Vorab-Tiefenkarte basierend auf der Abfolge von Bildinformationen zu erstellen; und um die Vorab-Tiefenkarte basierend auf Tiefeninformationen, die auf aus den optischen Kanälen erhaltenen Disparitätsinformationen basieren, zu ergänzen, um die Tiefenkarte (38) zu erhalten.

10. Vorrichtung gemäß einem der vorangehenden Ansprüche, die ausgebildet ist, um die Fokussiereinrichtung (32) so zu steuern, dass die Abfolge von Fokuslagen (56) innerhalb eines Toleranzbereichs von 25 % äquidistant im Bildraum zwischen einer minimalen Fokuslage und einer maximalen Fokuslage verteilt ist.

11. Vorrichtung gemäß einem der vorangehenden Ansprüche, die ausgebildet ist, um basierend auf der Abfolge von Bildinformationen (36) eine Abfolge von das Gesamtgesichtsfeld (26₁, 26₂) wiedergebenden Gesamtbildern (42) zu erzeugen, wobei jedes Gesamtbild (42) auf einer Kombination von Teilbildern (64) gleicher Fokuslage (56) basiert.

12. Vorrichtung gemäß einem der vorangehenden Ansprüche, die ausgebildet ist, um ein das Gesamtgesichtsfeld (26₁, 26₂) wiedergebendes Gesamtbild (42) basierend auf der Tiefenkarte (38) durch ein nachträgliches Scharfstellen und/oder Unscharfstellen eines oder mehrerer Bildbereiche zu verändern.

13. Vorrichtung gemäß einem der vorangehenden Ansprüche, die konfiguriert ist, um ein Abbild des Gesamtgesichtsfeldes (26₁, 26₂) als Monoaufnahme zu erstellen und die Tiefenkarte (38) aus der Abfolge von Monoaufnahmen zu erstellen.

14. Vorrichtung gemäß einem der vorangehenden Ansprüche, wobei ein erster optischer Kanal (16a) des Arrays (14) ausgebildet ist, um ein erstes Teilgesichtsfeld (24a) des Gesamtgesichtsfeldes (26₁; 26₂) abzubilden, wobei ein zweiter optischer Kanal (16b) des Arrays (14) ausgebildet ist, um ein zweites Teilgesichtsfeld (24b) des Gesamtgesichtsfeldes (26₁; 26₂) abzubilden, und wobei ein dritter optischer Kanal (24c) ausgebildet ist, um das Gesamtgesichtsfeld (26₁; 26₂) vollständig abzubilden.

15. Vorrichtung gemäß einem der vorangehenden Ansprüche, bei der die Fokussiereinrichtung (32) zumindest einen Aktor (74) zum Einstellen der Fokuslage (56) aufweist, wobei die Fokussiereinrichtung (32) so angeordnet ist, dass sie zumindest teilweise zwischen zwei Ebenen (68a, 68b) angeordnet ist, die durch Seiten (69a, 69b) eines Quaders (69) aufgespannt werden, wobei die Seiten (69a, 69b) des Quaders (69) zueinander sowie zu einer Zeilenerstreckungsrichtung (2) des Arrays (14) und eines Teils des Strahlengangs (104) der optischen Kanäle (16a-d) zwischen dem Bildsensor (12) und der Strahlumlenkeinrichtung (18) parallel ausgerichtet sind und dessen Volumen minimal ist und dennoch den Bildsensor (12), das Array (14) und die Strahlumlenkeinrichtung (18) umfasst.

## Claims

1. A device comprising:
a multi-aperture imaging device comprising:
an image sensor (12);
an array (14) of adjacently arranged optical channels (16a-d), each optical channel (16a-d) including optics (22a-d) for projecting at least a partial field of view (24a-d) of a total field of view (26₁, 26₂) on an image sensor area (28a-d) of the image sensor (12),
a beam deflector (18) for deflecting a beam path (104) of the optical channels (16a-d),
focusing means (32) for adjusting a focal position of the multi-aperture imaging device;
the device further comprising:
control means (34; 54) configured to control the focusing means (32) and to receive image information (36) from the image sensor (12); wherein the control means (34; 54) is configured to control the multi-aperture imaging device to move to a sequence of focal positions (56) so as to detect a corresponding sequence of image information (36) of the total field of view (26₁, 26₂), and to produce a depth map (38) for the detected total field of view on the basis of the sequence of image information (36);
wherein the control means (34; 54) is configured to
detect, in the sequence of focal positions (56), a corresponding number of groups of partial images (64), each partial image (64) being associated with a projected partial field of view (24a-d); to
produce the depth map (38) from a comparison of local image sharpness information in the partial images (64); and to
assemble, while using the depth map (38), the partial images (64) of a group of partial images into a total image (42);
to select areas of the total field of view in the preliminary depth map on the basis of a quality criterion for which an improvement is required, and to determine additional depth information for supplementing the preliminary depth map for the selected areas and not to determine them for non-selected areas.

2. The device as claimed in claim 1, wherein the quality criterion indicates whether at least a minimum quality is achieved or whether a negative quality criterion is not exceeded.

3. The device as claimed in claim 1 or 2, wherein each partial image is associated with a projected partial field of view and each of the groups of partial images comprises a common focal position, wherein the control means (34; 54) is configured to perform the comparison of local image sharpness information in the partial images and to produce the depth maps therefrom.

4. The device as claimed in any one of the preceding claims, wherein the control means is configured to obtain, knowing the focal position that has been adjusted for detecting the group of partial images and after determining sharply projected objects located in the respectively adjusted focal position, information that the respective sharply projected image areas have been taken in a distance from the multi-aperture imaging device corresponding to the adjusted focal position.

5. The device as claimed in any one of the preceding claims, wherein the control means is configured to obtain, using several groups of partial images and several focal positions, information that the respective sharply projected image areas have been taken in a distance from the multi-aperture imaging device, to obtain for different objects and to produce for the entire field of view in order to achieve the depth map.

6. The device as claimed in any one of the preceding claims, wherein the control means is configured to determine, on the basis of the knowledge of which one of the focal positions has been adjusted to receive the partial image and by analyzing the image information for which parts of the image are sharply projected, in which distance said sharply projected objects are arranged with regard to the device and to use this information with regard to the distance for the depth map.

7. The device as claimed in any one of the preceding claims, wherein the control means is configured to use the sharpness of the same objects in neighboring images of the stack, the allocation of the focus-actuator position to the object distance via a calibrated look-up table and/or the orientation of the through focus scan in order to gain the depth information partially recursively from neighboring images of the stack and to avoid ambiguities.

8. The device as claimed in any one of the preceding claims, wherein the control means is configured to produce the depth map (38) from the sequence of image information (36).

9. The device as claimed in any one of the preceding claims, wherein the optical channels are configured to detect the total field of view in an at least stereoscopic manner;
wherein the control means is configured to produce a preliminary depth map on the basis of disparity information obtained from the optical channels; and to supplement the preliminary depth map on the basis of depth information based on the sequence of image information in order to obtain the depth map (38); or
wherein the control means is configured to produce a preliminary depth map on the basis of the sequence of image information; and to supplement the preliminary depth map on the basis of depth information based on disparity information obtained from the optical channels in order to obtain the depth map (38).

10. The device as claimed in any of the preceding claims, configured to control the focusing means (32) so that the sequence of focal positions (56) is equidistantly distributed in a tolerance range of 25% in the image space between a minimum focal position and a maximum focal position.

11. The device as claimed in any of the preceding claims, configured to generate a sequence of total images (42) representing the total field of view (26₁, 26₂) on the basis of the sequence of image information (36), wherein each total image (42) is based on a combination of partial images (64) of the same focal position (56).

12. The device as claimed in any of the preceding claims, configured to change a total image (42), which represents the total field of view (26₁, 26₂), on the basis of the depth map (38) by subsequent focusing and/or defocusing of one or more image areas.

13. The device as claimed in any of the preceding claims, configured to produce an image of the total field of view (26₁, 26₂) as a mono image and to produce the depth map (38) from the sequence of mono images.

14. The device as claimed in any of the preceding claims, wherein a first optical channel (16a) of the array (14) is configured to map a first partial field of view (24a) of the total field of view (26₁; 26₂), wherein a second optical channel (16b) of the array (14) is configured to image a second partial field of view (24b) of the total field of view (26₁; 26₂), and wherein a third optical channel (24c) is configured to completely image the total field of view (26₁; 26₂).

15. The device as claimed in any of the preceding claims, wherein the focusing means (32) comprises at least one actuator (74) for adjusting the focal position (56), wherein the focusing means (32) is arranged so that the same is arranged at least partially between two planes (68a, 68b) spanned by sides (69a, 69b) of a cuboid (69), wherein the sides (69a, 69b) of the cuboid (69) are aligned in parallel to each other and to a line extension direction (2) of the array (14) and part of the beam path (104) of the optical channels (16a-d) between the image sensor (12) and the beam deflector (18) and the volume of the same is minimal, but still includes the image sensor (12), the array (14) and the beam deflector (18).

## Revendications

1. Dispositif avec :
un dispositif d'imagerie à ouvertures multiples avec :
un capteur d'image (12) ;
un réseau (14) de canaux optiques (16a à d) disposés l'un à côté de l'autre, où chaque canal optique (16a à d) comporte une optique (22a à d) destinée à reproduire au moins un champ de vision partiel (24a à d) d'un champ de vision global (26₁, 26₂) sur une zone de capteur d'image (28a à d) du capteur d'image (12),
un moyen de déviation de faisceau (18) destiné à dévier un trajet de faisceau (104) des canaux optiques (16a à d),
un moyen de focalisation (32) destiné à régler une position de focalisation du dispositif d'imagerie à ouvertures multiples ;
dans lequel le dispositif présente par ailleurs :
un moyen de commande (34 ; 54), qui est conçu pour commander le moyen de focalisation (32) et pour recevoir des informations d'image (36) du capteur d'image (12) ; le moyen de commande (34 ; 54) étant configuré pour commander le dispositif d'imagerie à ouvertures multiples dans une séquence de positions de focalisation (56) pour capturer une séquence correspondante d'informations d'image (36) du champ de vision global (26₁, 26₂), et pour créer, sur base de la séquence d'informations d'image (36), une carte de profondeur (38) pour le champ de vision global capturé ;
dans lequel le moyen de commande (34 ; 54) est conçu
pour capturer, dans la séquence de positions de focalisation (56), un nombre correspondant de groupes d'images partielles (64), où chaque image partielle (64) est attribuée à un champ de vision partiel reproduit (24a à d) ;
pour créer la carte de profondeur (38) à partir d'une comparaison d'informations de netteté d'image locale dans les images partielles (64) ; et
pour assembler, à l'aide de la carte de profondeur (38), les images partielles (64) d'un groupe d'images partielles pour obtenir une image globale (42) ;
pour sélectionner des zones du champ de vision global dans une carte de profondeur préliminaire à l'aide d'un critère de qualité, pour lesquelles est requise une amélioration et pour déterminer des informations de profondeur additionnelles pour compléter la carte de profondeur préliminaire pour les zones sélectionnées et pour ne pas les déterminer pour des zones non sélectionnées.

2. Dispositif selon la revendication 1, dans lequel le critère de qualité indique si au moins une qualité minimale est obtenue ou si aucun dépassement d'un critère de qualité négatif n'a lieu.

3. Dispositif selon la revendication 1 ou 2, dans lequel chaque image partielle est attribuée à un champ de vision partiel reproduit, et chacun des groupes d'images partielles présente une position de focalisation commune, où le moyen de commande (34 ; 54) est conçu pour exécuter la comparaison d'informations de netteté d'image locale dans les images partielles et pour créer les cartes de profondeur à partir de celle-ci.

4. Dispositif selon l'une des revendications précédentes, dans lequel le moyen de commande est conçu, en connaissant la position de focalisation, qui a été réglée pour capturer le groupe d'images partielles et en définissant des objets reproduits de manière nette qui se trouvent dans la position de focalisation respectivement réglée, pour obtenir une information de telle sorte que les zones d'image reproduites respectivement de manière nette ont été prises en se trouvant à une distance du dispositif d'imagerie à ouvertures multiples qui correspond à la position de focalisation réglée.

5. Dispositif selon l'une des revendications précédentes, dans lequel le moyen de commande est conçu, en utilisant plusieurs groupes d'images partielles et plusieurs positions de focalisation, pour obtenir une information de telle sorte que les zones d'image reproduites respectivement de manière nette ont été prises en se trouvant à une distance du dispositif d'imagerie à ouvertures multiples, pour obtenir pour différents objets et pour générer pour le champ de vision global afin de parvenir à la carte de profondeur.

6. Dispositif selon l'une des revendications précédentes, dans lequel le moyen de commande est conçu, sur base de la connaissance selon laquelle les positions de focalisation ont été réglées pour obtenir l'image partielle, par l'analyse de l'information d'image dans le sens où les parties d'image sont reproduites de manière nette, pour définir à quelle distance ces objets reproduits de manière nette sont disposés par rapport au dispositif et pour utiliser cette information par rapport à la distance pour la carte de profondeur.

7. Dispositif selon l'une des revendications précédentes, dans lequel le moyen de commande est conçu pour utiliser la netteté des mêmes objets dans des images adjacentes de l'empilement, l'attribution de la position d'actionneur de focalisation par rapport à la distance d'objet par le biais d'une table de correspondance calibrée et/ou la direction du balayage par focalisation pour obtenir l'information de profondeur de manière partiellement récursive à partir d'images adjacentes de l'empilement et éviter des ambiguïtés.

8. Dispositif selon l'une des revendications précédentes, dans lequel le moyen de commande est conçu pour créer la carte de profondeur (38) à partir de la séquence d'informations d'image (36).

9. Dispositif selon l'une des revendications précédentes, dans lequel les canaux optiques sont conçus pour capturer le champ de vision global au moins de manière stéréoscopique ;
dans lequel le moyen de commande est conçu pour créer une carte de profondeur préliminaire sur base d'informations de disparité obtenues à partir des canaux optiques ; et pour compléter la carte de profondeur préliminaire sur base d'informations de profondeur qui se basent sur la séquence d'informations d'image pour obtenir la carte de profondeur (38) ; ou
dans lequel le moyen de commande est conçu pour créer une carte de profondeur préliminaire sur base de la séquence d'informations d'image ; et pour compléter la carte de profondeur préliminaire sur base d'informations de profondeur qui se basent sur les informations de disparité obtenues à partir des canaux optiques pour obtenir la carte de profondeur (38).

10. Dispositif selon l'une des revendications précédentes, qui est conçu pour commander le moyen de focalisation (32) de sorte que la séquence de positions de focalisation (56) soit répartie de manière équidistante dans une plage de tolérance de 25% dans l'espace de l'image entre une position de focalisation minimale et une position de focalisation maximale.

11. Dispositif selon l'une des revendications précédentes, qui est conçu pour générer, sur base de la séquence d'informations d'image (36), une séquence d'images globales (42) reproduisant le champ de vision global (26₁, 26₂), dans lequel chaque image globale (42) est basée sur une combinaison d'images partielles (64) de même position de focalisation (56).

12. Dispositif selon l'une des revendications précédentes, qui est conçu pour modifier une image globale (42) reproduisant le champ de vision global (26₁, 26₂) sur base de la carte de profondeur (38) en rendant nettes et/ou en rendant floues ultérieurement une ou plusieurs zones d'image.

13. Dispositif selon l'une des revendications précédentes, qui est configuré pour créer une reproduction du champ de vision global (26₁, 26₂) comme enregistrement mono et pour créer la carte de profondeur (38) à partir de la séquence d'enregistrements mono.

14. Dispositif selon l'une des revendications précédentes, dans lequel un premier canal optique (16a) du réseau (14) est conçu pour reproduire un premier champ de vision partiel (24a) du champ de vision global (26₁ ; 26₂), dans lequel un deuxième canal optique (16b) du réseau (14) est conçu pour reproduire un deuxième champ de vision partiel (24b) du champ de vision global (26₁ ; 26₂), et dans lequel un troisième canal optique (24c) est conçu pour reproduire complètement le champ de vision global (26₁ ; 26₂).

15. Dispositif selon l'une des revendications précédentes, dans lequel le moyen de focalisation (32) présente au moins un actionneur (74) destiné à régler la position de focalisation (56), dans lequel le moyen de focalisation (32) est disposé de sorte qu'il soit disposé au moins partiellement entre deux plans (68a, 68b) qui sont délimités par les côtés (69a, 69b) d'un parallélépipède (69), où les côtés (69a, 69b) du parallélépipède (69) sont orientés de manière parallèle entre eux ainsi que par rapport à une direction d'extension de rangée (2) du réseau (14) et à une partie du trajet de faisceau (104) des canaux optiques (16a à d) entre le capteur d'image (12) et le moyen de déviation de faisceau (18) et dont le volume est minimum et comporte néanmoins le capteur d'image (12), le réseau (14) et le moyen de déviation de faisceau (18).
